# EUROPEAN PATENT APPLICATION

(11) **EP 4 804 639 A1**
(43) Date of publication of application: **09.09.2026**
(21) Application number: 23957368.6
(22) Date of filing: 03.11.2023
(51) Int. Cl.: H04W 52/02

(54) **CONTROL CHANNEL DETECTION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZUO, Zhisong, Dongguan, Guangdong 523860 (CN); CUI, Shengjiang, Dongguan, Guangdong 523860 (CN)
(74) Representative: RGTH
(86) International application number: PCT/CN2023/129789
(87) International publication number: WO 2025/091512

(57) **Abstract**

The present application relates to the technical field of communications, and discloses a control channel detection method and apparatus, a device, and a storage medium. The method comprises: receiving a first signal by means of a first receiver; and on the basis of an indication of the first signal, controlling a second receiver to detect a control channel. Because the power consumption of the first receiver is less than the power consumption of the second receiver, a better energy-saving effect can be achieved.

## Description

### TECHNICAL FIELD

Embodiments of the present application relate to the field of communication technologies, and in particular, to a method for detecting a control channel, an apparatus, a device, and a storage medium.

### BACKGROUND

In a non-power saving mode, a terminal device needs to detect a control channel even when there is no data transmission. Since a receiver for detecting the control channel has relatively high power consumption, detecting the control channel when there is no data transmission results in power consumption of the terminal device being relatively large.

In the related art, by the terminal device detecting a power saving signal, the terminal device detects the control channel according to an indication of the power saving signal, thereby achieving a certain degree of power consumption saving. However, in the above method, the detection of the power saving signal by the terminal device also causes power consumption of the terminal device. How to ensure that the power consumption of the terminal device is optimized to a greater extent remains an unsolved technical problem.

### SUMMARY

Embodiments of the present application provide a method for detecting a control channel, an apparatus, a device, and a storage medium. The technical solutions are as follows.

In one aspect, the embodiments of the present application provide a method for detecting a control channel, the method being performed by a terminal device, where the terminal device includes a first receiver and a second receiver, power consumption of the first receiver being less than power consumption of the second receiver; and the method includes:
receiving a first signal by the first receiver; and
controlling the second receiver to detect the control channel based on an indication of the first signal.

In another aspect, the embodiments of the present application provide a method for detecting a control channel, the method being performed by a network device; and the method includes:
transmitting a first signal, where the first signal is used to indicate a manner for a terminal device to control a second receiver to detect the control channel, the first signal is received by a first receiver of the terminal device, and power consumption of the first receiver is less than power consumption of the second receiver.

In another aspect, the embodiments of the present application provide an apparatus for detecting a control channel, where the apparatus includes a first receiver and a second receiver, power consumption of the first receiver being less than power consumption of the second receiver; and the apparatus further includes:
a receiving module, configured to receive a first signal by the first receiver; and
a control module, configured to control the second receiver to detect the control channel based on an indication of the first signal.

In another aspect, the embodiments of the present application provide an apparatus for detecting a control channel, where the apparatus includes:
a transmitting module, configured to transmit a first signal, where the first signal is used to indicate a manner for a terminal device to control a second receiver to detect the control channel, the first signal is received by a first receiver of the terminal device, and power consumption of the first receiver is less than power consumption of the second receiver.

In another aspect, the embodiments of the present application provide a terminal device, where the terminal device includes a first receiver and a second receiver, power consumption of the first receiver being less than power consumption of the second receiver; and
the terminal device includes a processor and a receiver connected to the processor; where
the receiver is configured to receive a first signal by the first receiver; and
the processor is configured to control the second receiver to detect a control channel based on an indication of the first signal.

In another aspect, the embodiments of the present application provide a network device, where the network device includes a processor and a transmitter connected to the processor; where
the transmitter is configured to transmit a first signal, the first signal is used to indicate a manner for a terminal device to control a second receiver to detect a control channel, the first signal is received by a first receiver of the terminal device, and power consumption of the first receiver is less than power consumption of the second receiver.

In another aspect, the embodiments of the present application provide a computer-readable storage medium storing a computer program, and the computer program is configured to be executed by a processor, to implement the above method for detecting a control channel.

In another aspect, the embodiments of the present application provide a chip, where the chip includes a programmable logic circuit and/or program instructions, and the chip, when operated on a terminal or a network device, is configured to implement the above method for detecting a control channel.

In another aspect, the embodiments of the present application provide a computer program product, where the computer program product includes computer instructions stored in a computer-readable storage medium, and a processor of a communication device reads the computer instructions from the computer-readable storage medium and executes the computer instructions, to enable the communication device to implement the above method for detecting a control channel.

In another aspect, the embodiments of the present application provide a computer program, which is executed by a processor of a communication device, to implement the above method for detecting a control channel.

The technical solutions provided in the embodiments of the present application may include the following beneficial effects.

Through receiving the first signal by the first receiver and controlling the second receiver to detect the control channel based on the indication of the first signal, the terminal device is enabled to use the first receiver with lower power consumption to detect the first signal in most cases. Only in certain situations such as when there is data transmission, does the terminal device control the second receiver to detect the control channel, so that power consumption of the terminal device can be reduced as much as possible and better power saving effect can be achieved.

### BRIEF DESCRIPTION OF THE DRAWINGS

FIG. 1 illustrates a schematic diagram of a discontinuous reception transmission mechanism provided in the related art.
FIG. 2 illustrates a schematic diagram of a wake up receiver provided in the related art.
FIG. 3 illustrates a schematic diagram of a communication system provided in the embodiments of the present application.
FIG. 4 illustrates a flowchart of a method for detecting a control channel provided in the embodiments of the present application.
FIG. 5 illustrates a flowchart of a method for detecting a control channel provided in the embodiments of the present application.
FIG. 6 illustrates a schematic diagram of a method for detecting a control channel provided in the embodiments of the present application.
FIG. 7 illustrates a schematic diagram of a method for detecting a control channel provided in the embodiments of the present application.
FIG. 8 illustrates a schematic diagram of a method for detecting a control channel provided in the embodiments of the present application.
FIG. 9 illustrates a schematic diagram of a method for detecting a control channel provided in the embodiments of the present application.
FIG. 10 illustrates a flowchart of a method for detecting a control channel provided in the embodiments of the present application.
FIG. 11 illustrates a flowchart of a method for detecting a control channel provided in the embodiments of the present application.
FIG. 12 illustrates a schematic diagram of generating a first signal provided in the embodiments of the present application.
FIG. 13 illustrates a flowchart of a method for detecting a control channel provided in the embodiments of the present application.
FIG. 14 illustrates a structural block diagram of an apparatus for detecting a control channel provided in the embodiments of the present application.
FIG. 15 illustrates a structural block diagram of an apparatus for detecting a control channel provided in the embodiments of the present application.
FIG. 16 illustrates a structural schematic diagram of a communication device provided in the embodiments of the present application.

### DETAILED DESCRIPTION

To make objectives, technical solutions and advantages of the present application clearer, implementations of the present application will be described in further detail below with reference to the accompanying drawings. Here, exemplary embodiments, examples of which are illustrated in the accompanying drawings, will be described in detail. When the following description refers to the accompanying drawings, the same numbers in different accompanying drawings represent the same or similar elements unless otherwise indicated. The implementations described in the following exemplary embodiments do not represent all implementations consistent with the present application. On the contrary, they are merely examples of apparatuses and methods consistent with some aspects of the present application as detailed in the appended claims. For the embodiments of the present application, all other embodiments obtained by a person of ordinary skill in the art without creative efforts shall fall within the protection scope of the present application.

The terms used in the present disclosure are merely for the purpose of describing particular embodiments, and are not intended to limit the present disclosure. The singular forms "a/an", "the" and "the said" as used in the present disclosure and the appended claims are also intended to include the plural forms, unless the context clearly indicates otherwise. It should also be understood that the term "and/or" as used herein refers to and includes any or all possible combinations of one or more associated listed items.

It should be understood that although the terms "first", "second", "third" or the like may be used in the present disclosure to describe various types of information, such information should not be limited to these terms. These terms are merely used to distinguish the same type of information from each other. For example, without departing from the scope of the present disclosure, first information may also be referred to as second information, and similarly, second information may also be referred to as first information. Depending on the context, the phrase "if" as used herein may be interpreted as "when" or "while" or "in response to determining".

First, the related art involved in the embodiments of the present application is introduced.

### Discontinuous Reception (DRX)

For the purpose of power saving of a terminal device, existing systems all support the DRX transmission mechanism. The main principle is to achieve discontinuous reception of signals in the time domain through semi-static configuration. When there is no data transmission, power consumption can be reduced by stopping the reception of a physical downlink control channel (PDCCH).

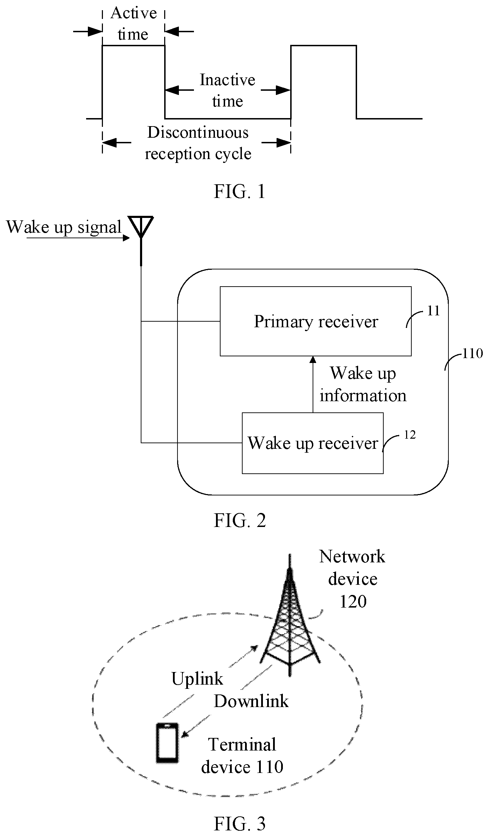

A method for configuring DRX involves configuring a DRX cycle for a terminal device in a radio resource control connected state (RRC_CONNECTED). As illustrated in FIG. 1, one DRX cycle consists of an Active Time and an Inactive Time: during the "Active Time", the terminal device monitors and receives the PDCCH; and during the "Inactive Time", the terminal device does not receive the PDCCH to reduce power consumption.

### Control Channel Skipping

In a 5th-Generation (5G) communication evolution project, an enhanced mechanism for power saving is discussed. Similar to the DRX mechanism, a PDCCH skipping mechanism also aims at ensuring a reduction in the number of detections of the PDCCH.

A specific method is to enable a terminal device to receive a format of a control channel indication. Taking downlink scheduling as an example, a certain number of bits are provided in an indication format of the PDCCH to indicate a unit for subsequent PDCCH skipping. For example, 2 bits in the control channel indication format are used to indicate the unit for subsequent PDCCH skipping.

### Terminal Power Saving Based on Wake Up Receiver

To further save power for terminal devices, the 3rd Generation Partnership Project (3GPP) Release 18 (R18) standard considers introducing a wake up receiver (WUR) to receive a wake up signal. The wake up receiver is a deeper sleep mode characterized by extremely low cost, extremely low complexity and extremely low power consumption, and mainly receives the wake up signal in an envelope detection manner. In other manners, the use of manners similar to traditional receivers is not excluded. In summary, the power consumption level of the wake up receiver is several orders of magnitude lower than that of a traditional sleep mode. Generally, the power consumption of a traditional receiver is greater than 100 milliwatts, while the power consumption of a low-power receiver may be lower than 1 milliwatt. Therefore, the wake up signal (WUS) received by the wake up receiver differs in modulation scheme, waveform and so on from signals carried based on the PDCCH as defined in the existing 3GPP new radio (NR) standards. The wake up signal may be an envelope signal modulated by performing amplitude shift keying (ASK) on a carrier signal. The demodulation of the envelope signal is mainly accomplished by driving a low-power circuit with power provided by the radio frequency signal, so it may be passive. The wake up receiver may also be powered by a terminal device. Regardless of the power supply manner, the wake up receiver significantly reduces power consumption compared to traditional receivers. The wake up receiver may be integrated with a terminal device as an additional module of the receiver of the device, or may be separately provided as a wake up function module of the terminal device.

For example, as illustrated in FIG. 2, a terminal device 110 includes a primary receiver 11 and a wake up receiver 12. Here, the power consumption of the primary receiver 11 is higher than that of the wake up receiver 12. The wake up receiver 12 receives a wake up signal, and instructs the terminal device 110 to turn on the primary receiver 11 through wake up information in a case where the terminal device is required to turn on the primary receiver 11; or the primary receiver 11 may remain in a sleep state in a case where the terminal device is not required to turn on the primary receiver 11.

The WUR may be activated by a WUS at any time to receive a wake up signal. The wake up signal is mainly an envelope signal modulated by performing ASK on a carrier signal. For example, the WUS signal used in 802.11 technology employs On-Off keying (OOK) modulation. The principle of the OOK modulation is to modulate the amplitude of a carrier signal to a non-zero (1) and a zero value (0), which respectively corresponds to On and Off, to represent information bits. OOK is also known as binary ASK (2-ASK). For example, bit 1 is modulated to On, and bit 0 is modulated to Off.

FIG. 3 illustrates a schematic diagram of a communication system provided in an exemplary embodiment of the present application. The communication system 100 includes a terminal device 110 and a network device 120.

The terminal device 110 in the present application may also be referred to as a user equipment (UE), an access terminal, a user unit, a user station, a mobile station, a mobile platform, a remote station, a remote terminal, a mobile device, a user terminal, a terminal, a wireless communication device, a user agent or a user apparatus. The terminal includes but is not limited to: a handheld device, a wearable device, a vehicle-mounted device, and an Internet of Things (IoT) device, such as a mobile phone, a tablet, an ebook reader, a laptop computer, a desktop computer, a television, a gaming console, a mobile internet device (MID), an augmented reality (AR) terminal, a virtual reality (VR) terminal, a mixed reality (MR) terminal, a wearable device, a hand shank, an electronic tag, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a session initiation protocol (SIP) phone, a wireless local loop (WLL) station, a personal digital assistant (PDA), a set top box (STB), or a customer premise equipment (CPE).

The network device 120 in the present application provides wireless communication functions. The network device 120 includes but is not limited to: an evolved node B (eNB), a radio network controller (RNC), a node B (NB), a base station controller (BSC), a base transceiver station (BTS), a home base station (e.g., Home Evolved Node B or Home Node B, HNB), a baseband unit (BBU), an access point (AP) in a wireless fidelity (Wi-Fi) system, a wireless relay node, a wireless backhaul node, a transmission point (TP), a transmission and reception point (TRP), or the like. The network device 120 may also be a next generation node B (gNB) or transmission point (TRP or TP) in a 5th generation (5G) mobile communication system, or an antenna panel or a group of antenna panels (including multiple antenna panels) of a base station in the 5G system, or a network node constituting a gNB or transmission point, such as a baseband unit (BBU) or a distributed unit (DU), or a base station in beyond fifth generation (B5G) or 6th generation (6G) mobile communication system, or a core network (CN), a fronthaul, a backhaul, a radio access network (RAN), a network slicing, or a serving cell, a primary cell (PCell), a primary secondary cell (PSCell), a special cell (SpCell), a secondary cell (SCell) and a neighboring cell of a terminal device, or the like.

The terminal device 110 and the network device 120 communicate with each other through a certain air interface technology, such as a Uu interface. For example, there are two communication scenarios between the terminal device 110 and the network device 120: an uplink communication scenario and a downlink communication scenario. Here, the uplink communication refers to the terminal device 110 transmitting signals to the network device 120; and the downlink communication refers to the network device 120 transmitting signals to the terminal device 110.

The technical solutions provided in the embodiments of the present application may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an LTE frequency division duplex (FDD) system, an LTE time division duplex (TDD) system, an advanced long term evolution (LTE-A) system, a universal mobile telecommunication system (UMTS), a worldwide interoperability for microwave access (WiMAX) communication system, a 5G mobile communication system, an NR system, an evolution system of the NR system, a LTE-based access to unlicensed spectrum (LTE-U) system, an NR-based access to unlicensed spectrum (NR-U) system, a terrestrial networks (TN) system, a non-terrestrial networks (NTN) system, a wireless local area networks (WLAN), Wi-Fi, a cellular IoT system, a cellular passive IoT system, and the technical solutions may also be applied to a subsequent evolution system of the 5G NR system, as well as B5G, 6G and subsequent evolution systems.

In some embodiments of the present application, "NR" may also be referred to as the 5G NR system or the 5G system. Here, the 5G mobile communication system may include non-standalone (NSA) and/or standalone (SA). The technical solutions provided in the embodiments of the present application may further be applied to machine type communication (MTC), long term evolution-machine (LTE-M), device to device (D2D) network, machine to machine (M2M) network, Internet of Things (IoT) network or other networks. Here, the IoT network may include, for example, the Internet of Vehicles. The communication manners in the Internet of Vehicles system are collectively referred to as Vehicle to X (V2X, where X may represent anything). For example, the V2X may include: vehicle to vehicle (V2V) communication, vehicle to infrastructure (V2I) communication, vehicle to pedestrian (V2P) communication, vehicle to network (V2N) communication, or the like.

It should be understood that in the description of the embodiments of the present application, the term "correspond" may mean there is a relationship of direct or indirect correspondence between the two, or there is an association relationship between the two, or may be a relationship of indicating and being indicated, or configuring and being configured, or the like. In the embodiments of the present application, "predefined" may be implemented by prestoring corresponding codes, tables or other means that may be used to indicate relevant information in devices (e.g., including terminal devices and network devices). The specific implementation is not limited in the present application. For example, predefined may refer to what is defined in a protocol. In the embodiments of the present application, "protocol" may refer to standard protocols in the field of communications, such as LTE protocols, NR protocols, IoT protocols and related protocols applied in future communication systems, which is not limited in the present application.

The terminal device 110 involved in the embodiments of the present application may be an active device, in which the active device refers to a device that has its own power supply and can actively generate and transmit signals, such as a mobile phone, a computer, a smartwatch, a smart bracelet, or the like; the terminal device 110 may also be a passive device, in which the passive device refers to a device that does not require a power supply or can operate by receiving power from other devices, and may be referred to as a zero-power device, a zero-power terminal, a low-power device, a low-power terminal, or the like; the terminal device 110 may also be a device that obtains power from the environment, which may be referred to as an ambient power IoT device; the terminal device 110 may also be a device deployed in a fixed location, which may be referred to as a zero-power site, a low-power site, or the like; and the terminal device 110 may also be a terminal with a low power wake-up receiver (LP-WUR) in a cellular system, or a STA with a WUR in a WiFi system.

In a non-power saving mode, a terminal device needs to detect a control channel even when there is no data transmission. Since a receiver for detecting the control channel has relatively high power consumption, detecting the control channel when there is no data transmission results in power consumption of the terminal device being relatively large. In the related art, by the terminal device detecting a power saving signal, the terminal device detects the control channel according to an indication of the power saving signal, thereby achieving a certain degree of power consumption saving. However, in this solution, the detection of the power saving signal by the terminal device also causes power consumption of the terminal device.

To address the above problem, the embodiments of the present application propose a method for detecting a control channel, utilizing a first receiver with lower power consumption in the terminal device to receive a first signal, and then, based on an indication of the first signal, controlling a second receiver with higher power consumption to detect the control channel or enter a sleep state.

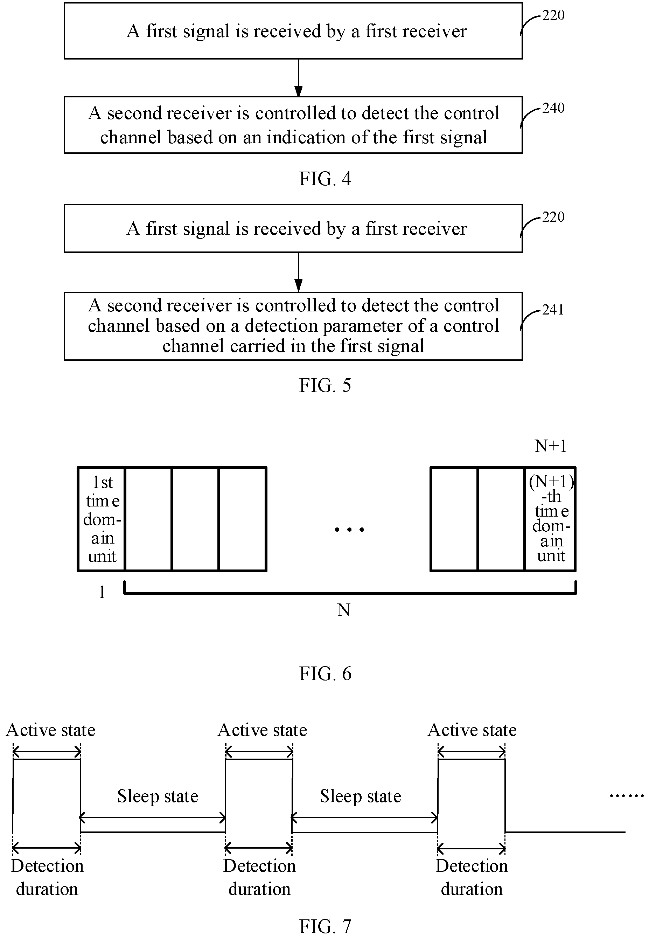

FIG. 4 illustrates a flowchart of a method for detecting a control channel provided in an exemplary embodiment of the present application. The method is performed by the terminal device and includes the following.

In step 220: a first signal is received by a first receiver.

In some embodiments, the terminal device includes the first receiver and a second receiver. Here, power consumption of the first receiver is less than power consumption of the second receiver. For example, as illustrated in FIG. 2, the first receiver may also be referred to as a wake up receiver, and the second receiver may also be referred to as a primary receiver. The first signal received by the first receiver is used to indicate whether the terminal device is required to detect a control channel and a manner for detecting the control channel.

Optionally, the manner for detecting the control channel includes at least one of: an occasion for detecting the control channel, a duration for detecting the control channel (abbreviated as detection duration), a period for detecting the control channel (abbreviated as detection period), or the number of times for detecting the control channel (referred to as detection count).

In some embodiments, the first signal is used to indicate that, in a case where it is required to wake up the second receiver to detect the control channel, the terminal device wakes up the second receiver, and controls the second receiver to enter a sleep state after the detection ends. It should be understood that, in the case where it is not required to wake up the second receiver to detect the control channel, the first receiver does not wake up the second receiver and the second receiver remains in the sleep state.

In some embodiments, the first signal may also be referred to as a wake up signal. The wake up signal is received by a wake up receiver with lower power consumption. The wake up signal is used to indicate that, in a case where it is required to wake up the primary receiver of the terminal device to detect the control channel, the terminal device wakes up the primary receiver with higher power consumption, and controls the primary receiver to enter a sleep state after the detection ends. It should be understood that, in the case where it is not required to wake up the primary receiver of the terminal device to detect the control channel, the wake up receiver does not wake up the primary receiver and the primary receiver will remain in the sleep state.

In some embodiments, the control channel includes a PDCCH and a sidelink control channel. In the embodiments of the present application, the PDCCH is used as an example for illustration.

In some embodiments, a waveform of the first signal is different from a waveform of the control channel. Optionally, the waveform of the first signal is a first waveform corresponding to a single-carrier signal, and the waveform of the control channel is a second waveform corresponding to a multi-carrier signal. Here, the single-carrier refers to a modulation technique that uses only one carrier within a fixed frequency band, e.g., 2-ASK. The multi-carrier refers to a modulation technique that uses multiple carriers within a fixed frequency band, e.g., orthogonal frequency division multiplexing (OFDM).

In some embodiments, a modulation scheme of the first signal is different from a modulation scheme of the control channel. Optionally, the first signal is obtained by using a single-carrier modulation scheme. The control channel is obtained by using a multi-carrier modulation scheme, that is, control signaling carried on the control channel is obtained by using a multi-carrier modulation scheme. Optionally, the first signal is obtained by using a target modulation scheme.

In some embodiments, the target modulation scheme used for modulation to obtain the first signal includes at least one of:
- single-carrier amplitude modulation;
- single-carrier frequency modulation; or
- single-carrier phase modulation.

In some embodiments, the first signal carries a first identifier of a target terminal device. In a case where the first signal carries the first identifier of the target terminal device, the first signal is received by the target terminal device through the first receiver. In some embodiments, the first signal carries a second identifier of a target terminal device group. In a case where the first signal carries the second identifier of the target terminal device group, the first identifier is received by all or part of terminal devices in the target terminal device group through the first receiver.

In step 240: the second receiver is controlled to detect the control channel based on an indication of the first signal.

In some embodiments, the first signal is used to indicate the second receiver to detect the control channel or to indicate the second receiver not to detect the control channel.

Optionally, the terminal device, based on the indication of detecting the control channel in the first signal, wakes up the second receiver to detect the control channel, and controls the second receiver to enter the sleep state after detection ends.

Optionally, the terminal device, based on the indication of not detecting the control channel in the first signal, does not wake up the second receiver, keeping the second receiver continuously in the sleep state.

Optionally, the first receiver enters the sleep state in a case where the second receiver detects the control channel.

In summary, according to the method provided in the embodiment, through receiving the first signal by the first receiver and controlling the second receiver to detect the control channel based on the indication of the first signal, the terminal device is enabled to use the first receiver with lower power consumption to detect the first signal in most cases. Only in certain situations such as when there is data transmission, does the terminal device control the second receiver to detect the control channel, so that power consumption of the terminal device can be reduced as much as possible and better power saving effect can be achieved.

In some embodiments, the first signal carries a detection parameter of the control channel. As illustrated in FIG. 5, the above step 240 may be replaced by the following sub-steps.

In step 241: the second receiver is controlled to detect the control channel based on the detection parameter of the control channel carried in the first signal.

In some embodiments, the detection parameter of the control channel carried in the first signal includes at least one of:
- a start detection indication;
- a detection duration;
- a detection period;
- a detection count; or
- a first search space set.

In some embodiments, the above step 241 may be replaced by at least one of the following sub-steps.

In sub-step 1: the second receiver is controlled to start detecting the control channel in a first time domain unit based on the start detection indication.

Optionally, the detection parameter of the control channel carried in the first signal includes the start detection indication. The start detection indication is used to indicate a start occasion for the second receiver to detect the control channel. For example, the start detection indication is used to indicate the second receiver to start detecting the control channel in the first time domain unit.

In some embodiments, the first time domain unit is a time domain unit in which the first signal is received. In some embodiments, considering that it takes a certain amount of time to wake up the second receiver, the first time domain unit is an N-th time domain unit after the first signal. A value of N is a positive integer. It should be understood that, assuming the first signal is received in the 1st time domain unit, then the first time domain unit being the N-th time domain unit after the first signal means that the first time domain unit is actually the (N+1)-th time domain unit. For example, as illustrated in FIG. 6, the (N+1)-th time domain unit is the N-th time domain unit after the 1st time domain unit. In some embodiments, N is determined based on higher layer configuration, or N is determined based on a system parameter of the communication system.

Optionally, N is determined based on higher layer configuration. For example, assuming the first signal is received in the 1st time domain unit and higher layer configuration sets N=5, then the second receiver will start detecting the control channel in the 6th time domain unit. Optionally, N is determined according to the system parameter of the communication system. For example, the system parameter indicates a target subcarrier spacing, and it is determined that the second receiver will start detecting the control channel in the N-th time domain unit based on the target subcarrier spacing. Optionally, different subcarrier spacings correspond to different values of N.

According to the method provided in the embodiment, by receiving the first signal carrying the start detection indication, the terminal device is enabled to control the second receiver to detect the control channel based on the start detection indication. Only in a case where there is the start detection indication, does the terminal device need to control the second receiver with higher power consumption to detect the control channel; and in a case where there is not the start detection indication, the terminal device may use only the first receiver with lower power consumption, thereby reducing power consumption.

In sub-step 2: in a case where a duration for which the second receiver detects the control channel reaches the detection duration, the second receiver is controlled to enter the sleep state and the first signal is detected by the first receiver.

Optionally, the detection parameter of the control channel carried in the first signal includes the detection duration. The detection duration is used to indicate the second receiver to detect the control channel for a fixed duration. For example, the detection duration is used to indicate the second receiver to detect the control channel between a first moment and a second moment, where the second moment is a moment after the first moment. It should be understood that the second receiver is in an active state during the detection duration and is in the sleep state outside the detection duration. That is, the second receiver is in the active state between the first moment and the second moment, and the second receiver enters the sleep state from the active state after the second moment. In some embodiments, the detection duration is defined for each detection period, and a duration corresponding to the active period within each detection period is the detection duration.

In some embodiments, the detection duration is monitored based on a first timer; and in a case where the first timer expires, it is determined that the duration for which the second receiver detects the control channel reaches the detection duration. In this case, the second receiver stops detecting the control channel and enters the sleep state from the active state. The terminal device resumes detecting the first signal by the first receiver. For example, as illustrated in FIG. 7, the detection duration equals the duration corresponding to the active state within each detection period. The second receiver is in the active state during the detection duration and switches from the active state to the sleep state after the duration for detecting the control channel within each detection period reaches the detection duration.

According to the method provided in the embodiment, by receiving the first signal carrying the detection duration, the terminal device is enabled to control the second receiver to detect the control channel based on the detection duration. Only within the detection duration, does the terminal device need to control the second receiver with higher power consumption to detect the control channel; and in a case where the duration for which the second receiver detects the control channel reaches the detection duration, the second receiver is controlled to enter the sleep state, and the first receiver with lower power consumption is used to detect the first signal, thereby reducing power consumption.

In sub-step 3: the second receiver is controlled to enter the sleep state outside the active period indicated by the detection period and the first signal is detected by the first receiver.

Optionally, the detection parameter of the control channel carried in the first signal includes the detection period. The detection period is used to indicate the second receiver to detect the control channel at a fixed period. For example, the detection period is used to indicate the second receiver to detect the control channel every target duration. Optionally, the target duration is determined based on a high layer configuration, or the target duration is determined based on a system parameter of the communication system.

In some embodiments, the second receiver detects the control channel within the active period indicated by the detection period. The active period is used to control or limit the time period during which the second receiver detects the control channel. It should be understood that the second receiver is in the active state during the active period and is in the sleep state outside the active period. That is, when entering the active period, the second receiver enters the active state from the sleep state; and at the moment the active period ends, the second receiver enters the sleep state from the active state and resumes detecting the first signal by the first receiver.

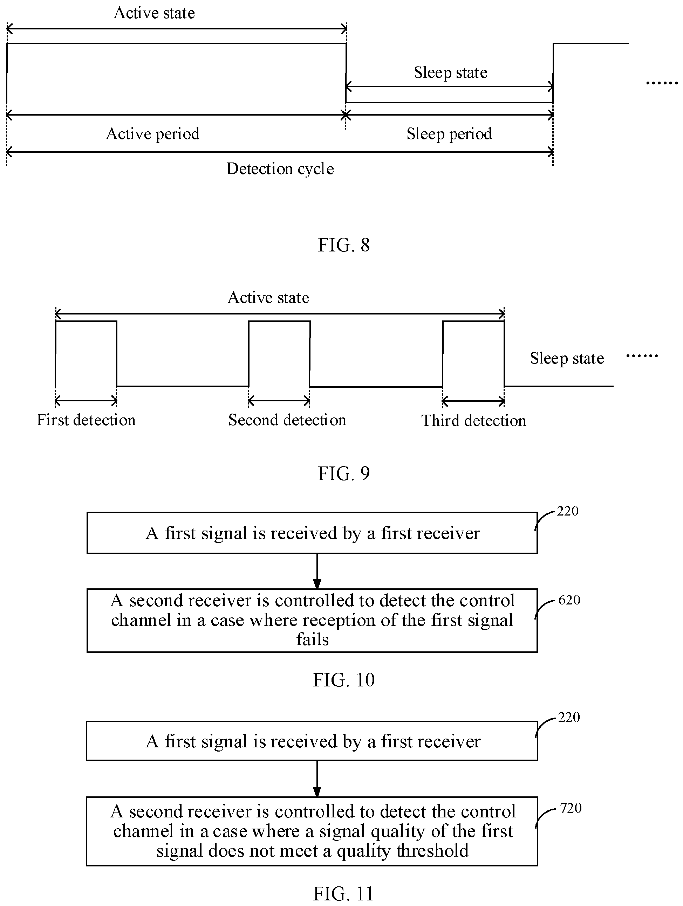

In some embodiments, the second receiver is controlled to enter the sleep state outside the active period within the detection period and the first signal is received by the first receiver; and/or, the second receiver is controlled to enter the sleep state during the sleep period within the detection period and the first signal is received by the first receiver. For example, as illustrated in FIG. 8, each detection period includes an active period corresponding to the active state and a sleep period corresponding to the sleep state, and the second receiver is in the active state during the active period and switches from the active state to the sleep state during the sleep period. During the sleep period, the first signal is detected by the first receiver. During the active period, the first receiver may remain awake or enter the sleep state.

According to the method provided in the embodiment, by receiving the first signal carrying the detection period, the terminal device is enabled to control the second receiver to detect the control channel based on the detection period. Only within the active period indicated by the detection period, does the terminal device need to control the second receiver with higher power consumption to detect the control channel; and outside the active period indicated by the detection period, the second receiver is controlled to enter the sleep state, and the first receiver with lower power consumption is used to detect the first signal, thereby reducing power consumption.

In sub-step 4: in a case where the number of times the second receiver detects the control channel reaches the detection count, the second receiver is controlled to enter the sleep state and the first signal is detected by the first receiver.

Optionally, the detection parameter of the control channel carried in the first signal includes the detection count. The detection count is used to indicate the number of times the second receiver detects the control channel. Optionally, the second receiver is in the active state when the number of times the second receiver detects the control channel is within the detection count. After the number of times the second receiver detects the control channel reaches the detection count, the second receiver switches from the active state to the sleep state.

In some embodiments, the second receiver detects the control channel within the detection count. The detection count is used to control or limit the number of times the second receiver detects the control channel. In some embodiments, the detection count is defined for each detection period and is used to indicate the number of detections required within the active period of each detection period.

In some embodiments, the detection count is monitored based on a second timer. In a case where the second timer expires, it is determined that the number of times the second receiver detects the control channel reaches the detection count. In this case, the second receiver stops detecting the control channel and enters the sleep state from the active state. The terminal device resumes receiving the first signal by the first receiver.

In some embodiments, the detection count equals the number of times the second receiver detects the control channel during the active period within each detection period. For example, as illustrated in FIG. 9, assuming the detection count is 3, the second receiver remains the active state from the start of the first detection until the end of the third detection, and switches from the active state to the sleep state after the third detection ends.

According to the method provided in the embodiment, by receiving the first signal carrying the detection count, the terminal device is enabled to control the second receiver to detect the control channel based on the detection count. Only within the detection count, does the terminal device need to control the second receiver with higher power consumption to detect the control channel; and in a case where the number of times the second receiver detects the control channel reaches the detection count, the second receiver is controlled to enter the sleep state, and the first receiver with lower power consumption is used to detect the first signal, thereby reducing power consumption.

In some embodiments, the detection parameter of the control channel carried in the first signal does not include the detection duration, and/or the detection period, and/or the detection count.

In some embodiments, the above method further includes the following.

In step 320: detection of the control channel is ended by the second receiver in a second time domain unit.

Optionally, in a case where the detection parameter of the control channel carried in the first signal does not include the detection duration, the detection of the control channel is ended by the second receiver in the second time domain unit.

Optionally, in a case where the detection parameter of the control channel carried in the first signal does not include the detection period, the detection of the control channel is ended by the second receiver in the second time domain unit.

Optionally, in a case where the detection parameter of the control channel carried in the first signal does not include the detection count, the detection of the control channel is ended by the second receiver in the second time domain unit.

Optionally, in a case where the detection parameter of the control channel carried in the first signal does not include the detection duration and the detection period, the detection of the control channel is ended by the second receiver in the second time domain unit.

Optionally, in a case where the detection parameter of the control channel carried in the first signal does not include the detection duration and the detection count, the detection of the control channel is ended by the second receiver in the second time domain unit.

Optionally, in a case where the detection parameter of the control channel carried in the first signal does not include the detection count and the detection period, the detection of the control channel is ended by the second receiver in the second time domain unit.

Optionally, in a case where the detection parameter of the control channel carried in the first signal does not include the detection duration, the detection period and the detection count, the detection of the control channel is ended by the second receiver in the second time domain unit.

In some embodiments, the second time domain unit is an M-th time domain unit after the first time domain unit. In some embodiments, the first time domain unit is a time domain unit in which the first signal is received. In some embodiments, considering that it takes a certain amount of time to wake up the second receiver, the first time domain unit is an N-th time domain unit after the first signal. The value of N is a positive integer. It should be understood that, assuming the first signal is received in the 1st time domain unit, then the first time domain unit being the N-th time domain unit after the first signal means that the first time domain unit is actually the (N+1)-th time domain unit. For example, as illustrated in FIG. 6, the (N+1)-th time domain unit is the N-th time domain unit after the 1st time domain unit. In some embodiments, N is determined based on higher layer configuration, or N is determined based on the system parameter of the communication system.

Optionally, N is determined based on higher layer configuration. For example, assuming the first signal is received in the 1st time domain unit and higher layer configuration sets N=5, then the second receiver will start detecting the control channel in the 6th time domain unit. Optionally, N is determined according to the system parameter of the communication system. For example, the system parameter indicates a target subcarrier spacing, and it is determined that the second receiver will start detecting the control channel in the N-th time domain unit based on the target subcarrier spacing. Optionally, different subcarrier spacings correspond to different values of N.

It should be understood that, assuming the first time domain unit is the (N+1)-th time domain unit, the second time domain unit is the M-th time domain unit after the first time domain unit, that is, the second time domain unit is actually the (M+N+1)-th time domain unit, where the value of M is a positive integer. In some embodiments, M is determined based on higher layer configuration, or M is determined based on a system parameter of the communication system.

According to the method provided in the embodiment, by ending the detection of the control channel by the second receiver in the second time domain unit, the terminal device is enabled to timely end the detection of the control channel in the second time domain unit in a case where the first signal does not carry an ending detection indication or in a case where the first signal does not carry an occasion used for indicating the end of detecting the control channel, which avoids continuously using the second receiver with higher power consumption to detect the control channel, thereby minimizing power consumption as much as possible.

Optionally, the detection parameter of the control channel carried in the first signal includes a search space set. The search space set is used to indicate a location where the second receiver detects the control channel.

In some embodiments, the detection parameter of the control channel carried in the first signal includes a first search space set.

In sub-step 5: it is switched to the first search space set by the second receiver to detect the control channel.

In some embodiments, the first search space set is a target location indicated by the first signal for the second receiver to detect the control channel. In a case where the detection parameter of the control channel carried in the first signal includes the first search space set, it is switched to the first search space set by the second receiver to detect the control channel.

In some embodiments, in a case where the detection parameter of the control channel carried in the first signal does not include the search space set, the method further includes the following.

In step 420: the control channel is detected by the second receiver according to a default second search space set, or the control channel is detected by the second receiver according to a third search space set used before sleeping.

Optionally, in a case where the detection parameter of the control channel carried in the first signal does not include the search space set, the control channel is detected by the second receiver according to the default second search space set. In some embodiments, the default second search space set is determined based on higher layer configuration, or the default second search space set is determined based on a system parameter.

Optionally, in a case where the detection parameter of the control channel carried in the first signal does not include the search space set, the control channel is detected by the second receiver according to the third search space set used before sleeping. It should be understood that the third search space set is a search space set used by the second receiver during its last control channel detection. For example, when detecting the control channel for the first time, the second receiver uses search space set 1, and enters the sleep state after the first detection ends; and then when detecting the control channel for the second time, since the detection parameter of the control channel carried in the first signal does not include the search space set, the second receiver still uses search space set 1 to detect the control channel.

According to the method provided in the embodiment, the second receiver can detect the control channel based on a relatively accurate location in a case where the first signal carries the first search space set or in a case where the first signal does not carry the first search space set, so as to improve the utilization efficiency of the second receiver and help to reduce power consumption.

In some embodiments, the above method further includes the following.

In step 520: subsequent control channel detection is performed based on an indication of the control channel in a case where the control channel is detected.

In some embodiments, in a case where the terminal device detects the control channel, the terminal device receives the indication of the control channel, and the indication of the control channel is used to instruct the terminal device on how to perform subsequent control channel detection, for example, including indicating the terminal device to control the second receiver to continue detecting the control channel, or indicating the terminal device to control the second receiver to interrupt detection and enter the sleep state, or indicating the terminal device to switch from the current search space to a target search space by the second receiver to perform the detection of the control channel.

In some embodiments, the indication of the control channel includes at least one of:
- a skipping indication;
- a sleep indication; or
- a fourth search space set.

Optionally, the indication of the control channel includes the skipping indication. The above step 520 may be replaced by at least one of the following sub-steps.

In sub-step 11: the second receiver is controlled to enter the sleep state based on the skipping indication in a case where the detected control channel carries the skipping indication.

In some embodiments, the skipping indication is used to indicate the terminal device to control the second receiver to enter the sleep state. That is, in a case of receiving the skipping indication, the terminal device controls the second receiver to no longer perform detection of the control channel. In this case, the second receiver stops detecting the control channel and enters the sleep state from the active state. The terminal device resumes receiving the first signal by the first receiver.

Optionally, the indication of the control channel includes the sleep indication.

In sub-step 12: the second receiver is controlled to enter the sleep state based on the sleep indication in a case where the detected control channel carries the sleep indication.

In some embodiments, the sleep indication is used to indicate the terminal device to control the second receiver to enter the sleep state. That is, in a case of receiving the sleep indication, the terminal device controls the second receiver to no longer perform detection of the control channel. In this case, the second receiver stops detecting the control channel and enters the sleep state from the active state. The terminal device resumes receiving the first signal by the first receiver.

Optionally, the indication of the control channel includes the search space set.

In sub-step 13: it is switched to the fourth search space set by the second receiver to detect the control channel in a case where the detected control channel carries the fourth search space set.

In some embodiments, the fourth search space set is a target location indicated by the control channel for the second receiver to detect the control channel. It is switched to the fourth search space set by the second receiver to detect the control channel in a case where the control channel carries the fourth search space set.

In summary, according to the method provided in the embodiment, by performing the subsequent control channel detection based on the indication of the control channel in a case where the control channel is detected, it is ensured that the terminal device controls the second receiver to detect the control channel only in a case where there is data transmission; and in a case where there is no data transmission, the second receiver enters the sleep state and only the first receiver with lower power consumption will be utilized, thereby achieving better power-saving effects.

FIG. 10 illustrates a flowchart of a method for detecting a control channel provided in an exemplary embodiment of the present application. The method is performed by a terminal device, and the method further includes the following.

In step 620: the second receiver is controlled to detect the control channel in a case where reception of the first signal fails.

In some embodiments, the first signal is detected by the first receiver. A waveform of the first signal is different from a waveform of the control channel. Optionally, the waveform of the first signal is a first waveform corresponding to a single-carrier signal, and the waveform of the control channel is a second waveform corresponding to a multi-carrier signal. Here, the single-carrier refers to a modulation technique that uses only one carrier within a fixed frequency band, e.g., 2-ASK. The multi-carrier refers to a modulation technique that uses multiple carriers within a fixed frequency band, e.g., OFDM.

In some embodiments, a modulation scheme of the first signal is different from a modulation scheme of the control channel. Optionally, the first signal is obtained by using a single-carrier modulation scheme, and the control channel is obtained by using a multi-carrier modulation scheme. Optionally, the first signal is obtained by using a target modulation scheme.

In some embodiments, the target modulation scheme used for modulation to obtain the first signal includes at least one of:
- single-carrier amplitude modulation;
- single-carrier frequency modulation; or
- single-carrier phase modulation.

In some embodiments, the first receiver receives the first signal, and there may be a case of reception success or a case of reception failure. In a case where the first receiver successfully receives the first signal, the step 240 is performed, and in a case where the first receiver fails to receive the first signal, the step 620 is performed.

In summary, according to the method provided in the embodiment, by controlling the second receiver to detect the control channel in a case where reception of the first signal fails, it is ensured that the terminal device can still detect the control channel even in a case where the first receiver fails to receive the first signal, thereby effectively preventing the detection of the control channel from being affected due to failure to receive the first signal.

FIG. 11 illustrates a flowchart of a method for detecting a control channel provided in an exemplary embodiment of the present application. The method is performed by a terminal device, and the method further includes the following.

In step 720: the second receiver is controlled to detect the control channel in a case where a signal quality of the first signal does not meet a quality threshold.

In some embodiments, the first signal is detected by the first receiver. A waveform of the first signal is different from a waveform of the control channel. Optionally, the waveform of the first signal is a first waveform corresponding to the single-carrier signal, and the waveform of the control channel is a second waveform corresponding to the multi-carrier signal. Here, the single-carrier refers to a modulation technique that uses only one carrier within a fixed frequency band, e.g., 2-ASK. The multi-carrier refers to a modulation technique that uses multiple carriers within the fixed frequency band, e.g., OFDM.

In some embodiments, the modulation scheme of the first signal is different from the modulation scheme of the control channel. Optionally, the first signal is obtained by using the single-carrier modulation scheme, and the control channel is obtained by using the multi-carrier modulation scheme. Optionally, the first signal is obtained by using the target modulation scheme.

In some embodiments, the target modulation scheme used for modulation to obtain the first signal includes at least one of:
- single-carrier amplitude modulation;
- single-carrier frequency modulation; or
- single-carrier phase modulation.

In some embodiments, the first receiver receives the first signal, and in a case of successful reception, there is a case where the signal quality of the received first signal meets the quality threshold or the signal quality of the received first signal does not meet the quality threshold. In a case where the received first signal meets the quality threshold, the step 240 is performed. In a case where the received first signal does not meet the quality threshold, the step 720 is performed.

In some embodiments, the signal quality is determined by at least one of: reference signal receiving power (RSRP), reference signal receiving quality (RSRQ), or signal to interference plus noise ratio (SINR). Here, RSRP refers to an average value of a received signal power on all resource elements (REs) carrying a reference signal within any one symbol. In a case where RSRP is relatively high, it reflects that the received signal power is relatively large and the signal quality is relatively good; and in a case where RSRP is relatively low, it reflects that the received signal power is relatively small and the signal quality is relatively poor. In a case where RSRQ is relatively high, it reflects that receiving quality of the reference signal is relatively good and the signal quality is relatively good; and in a case where RSRQ is relatively low, it reflects that receiving quality of the reference signal is relatively poor and the signal quality is relatively poor. SINR refers to a ratio of signal to noise. In a case where the ratio of signal to noise is relatively high, it reflects that there is less noise and signal quality is relatively good; and in a case where the ratio of signal to noise is relatively low, it reflects that there is more noise and signal quality is relatively poor.

In summary, according to the method provided in the embodiment, by controlling the second receiver to detect the control channel in a case where the signal quality of the first signal does not meet the quality threshold, it is ensured that the terminal device can still detect the control channel even in a case where the signal quality of the first signal received by the first receiver is poor, thereby effectively preventing the detection of the control channel from being affected due to issues with the signal quality of the first signal.

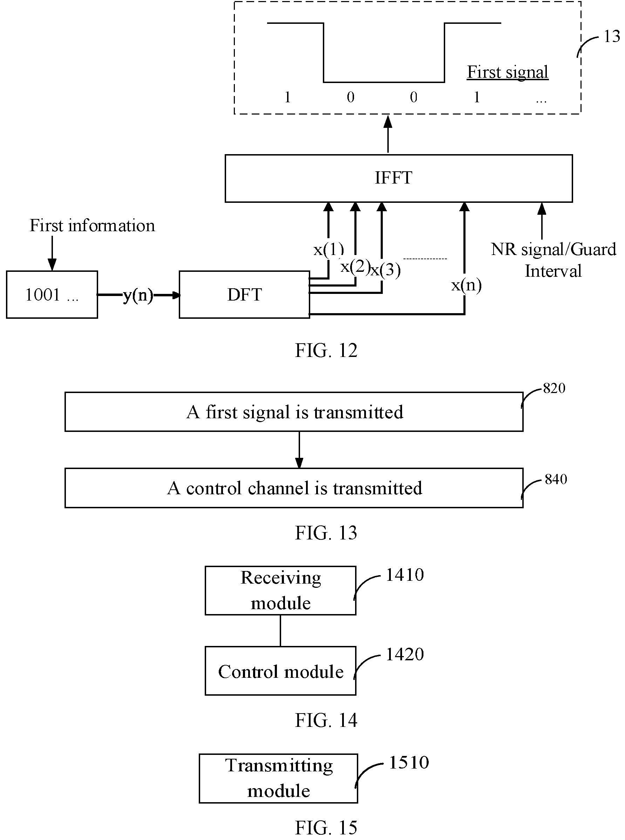

In some embodiments, the first signal is obtained by using the single-carrier amplitude modulation. For example, as illustrated in FIG. 12, first information is converted into a signal sequence of length K, where K is a positive integer greater than 1. The first information is information carried in the first signal. The conversion manner includes at least one of upsampling, spreading spectrum or sequence mapping. Optionally, in the manner of converting the first information using the sequence mapping, the sequence includes at least one of a constant amplitude zero auto correlation (CAZAC) sequence, a pseudo-noise (PN) sequence, a gold sequence, an M-sequence, or a Hadamard sequence.

Discrete Fourier Transform (DFT) is performed on the converted signal sequence to form multiple subcarrier signals. For example, DFT is performed on the converted signal sequence y(n) to obtain x(1), x(2) up to x(n). The multiple subcarrier signals generate the first signal by using Inverse Fast Fourier Transform (IFFT). The waveform of the first signal in the time domain appears as the first waveform 13. Optionally, the multiple subcarrier signals may also be multiplexed with other NR signals before performing IFFT. Optionally, DFT and IFFT are not performed on the converted signal sequence but the single-carrier amplitude modulation is directly performed on the converted signal sequence to obtain the first signal.

Optionally, the first signal is obtained through On Off Keying (OOK) modulation. OOK modulation is the process of modulating a digital sequence into a wireless signal with an MC-OOK waveform.

In some embodiments, the modulation steps for the first signal are as follows.

In step 21: a first sequence corresponding to the first information is obtained.

In some embodiments, the first sequence is any one of:
- an original sequence without encoding;
- an original sequence before encoding;
- an encoded sequence obtained after encoding the original sequence; or
- an encoded sequence obtained after performing at least one level of encoding in multilevel encoding on the original sequence.

In some embodiments, in a case where a sequence length of the first sequence is not an integer multiple of M, preprocessing is performed on the first sequence to obtain a second sequence whose sequence length is an integer multiple of M. M is the number of OOK symbols transmitted within a preset duration. The preset duration is determined by a basic time domain unit in a cellular communication system or a WIFI system. In some embodiments, the preset duration is t OFDM symbols, and M OOK symbols may be transmitted on t OFDM symbols. M is the number of OOK symbols transmitted within the t OFDM symbols. The value of t is a positive integer.

In step 22: the first sequence is divided to obtain at least one sequence segment.

In some embodiments, in a case where the first sequence is preprocessed to obtain the second sequence, the second sequence is divided to obtain the at least one sequence segment.

In step 23: OOK modulation is performed on each sequence segment to obtain an OOK symbol corresponding to each sequence segment.

In some embodiments, the OOK modulation includes at least one of: upsampling/spreading spectrum/sequence mapping, time-frequency transform, determination of subcarrier coefficients, or inverse time-frequency transform.

Upsampling/spreading spectrum/sequence mapping is a process of repeating each information or element corresponding to a signal K times, where K is a positive integer greater than 1. Taking spreading spectrum processing as an example, it is assumed that the first signal sequence corresponding to the first signal is {1,0,0,1} and the spreading spectrum factor K=4, then the sequence obtained by spreading spectrum is {1,1,1,1,0,0,0,0,0,0,0,0,1,1,1,1}.

Time-frequency transform, also referred to as DFT, refers to a processing process of transforming a sequence in the time domain into frequency domain data of several sampling points.

Determination of subcarriers coefficients refers to a process of determining coefficients of multiple subcarriers during transmission based on the frequency domain data of several sampling points, that is, the process of modulating the frequency domain data after time-frequency transform onto multiple subcarriers.

Inverse time-frequency transform, also referred to as Inverse Discrete Fourier Transform (IDFT), refers to a process of transforming the frequency domain data of several sampling points into the time domain data of several sampling points.

Optionally, the OOK modulation process further includes at least one of: phase randomization, symbol randomizer, or adding cyclic prefix (CP)/guard interval (GI).

The phase randomization is a process of processing intermediate data using a phase randomization factor or a phase randomization sequence. The intermediate data is intermediate process data generated during the OOK modulation process. Adding phase randomization in the OOK modulation process can flatten the power of the spectrum, improving frequency selectivity and anti-interference capability.

The symbol randomizer is used to eliminate spectral lines in the power spectral density (PSD) after processing OOK symbols to meet communication requirements of certain systems (e.g., 802.11) that require the elimination of spectral lines.

Adding CP/GI is used to reduce or eliminate multipath transmission interference received during the transmission of OOK symbols by adding CP/GI per symbol or collectively, so as to improve the reception quality of OOK symbols.

In some embodiments, the above step 320 may be implemented as a standalone embodiment. The above step 420 may be implemented as a standalone embodiment. The above step 520 may be implemented as a standalone embodiment. In some embodiments, at least one of the above sub-steps 1 to 5 may be implemented in combination as a new embodiment. At least one of the above sub-steps 11 to 13 may be implemented in combination as a new embodiment.

In some embodiments, the above step 220 and step 241 may be implemented in combination as a new embodiment. The step 220 and at least one of sub-steps 1 to 5 may be implemented in combination as a new embodiment. In some embodiments, the above step 220 and step 320 may be implemented in combination as a new embodiment. The step 220, step 320 and sub-step 5 may be implemented in combination as a new embodiment. In some embodiments, the above step 220 and step 420 may be implemented in combination as a new embodiment. The step 220, step 420 and at least one of sub-steps 1 to 4 may be implemented in combination as a new embodiment. In some embodiments, the above step 220, step 240 and step 520 may be implemented in combination as a new embodiment. The step 220, step 241 and step 520 may be implemented in combination as a new embodiment. The step 220, step 520 and at least one of sub-steps 1 to 5 may be implemented in combination as a new embodiment. In some embodiments, the above step 220, step 320 and step 520 may be implemented in combination as a new embodiment. In some embodiments, the above step 220, step 320, sub-step 5 and step 520 may be implemented in combination as a new embodiment. In some embodiments, the above step 220, step 420 and step 520 may be implemented in combination as a new embodiment. The step 220, step 420, step 520 and at least one of sub-steps 1 to 4 may be implemented in combination as a new embodiment. In some embodiments, the above step 220, step 240 and at least one of sub-steps 11 to 13 may be implemented in combination as a new embodiment. The step 220, step 241 and at least one of sub-steps 11 to 13 may be implemented in combination as a new embodiment. The step 220, at least one of sub-steps 11 to 13 and at least one of sub-steps 1 to 5 may be implemented in combination as a new embodiment. In some embodiments, the above step 220, step 320 and at least one of sub-steps 11 to 13 may be implemented in combination as a new embodiment. In some embodiments, the above step 220, step 320, sub-step 5 and at least one of sub-steps 11 to 13 may be implemented in combination as a new embodiment. In some embodiments, the above step 220, step 420 and at least one of sub-steps 11 to 13 may be implemented in combination as a new embodiment. The step 220, step 420, at least one of sub-steps 11 to 13 and at least one of sub-steps 1 to 4 may be implemented in combination as a new embodiment.

FIG. 13 illustrates a flowchart of a method for detecting a control channel provided in an exemplary embodiment of the present application. The method is performed by a network device and includes the following.

In step 820: a first signal is transmitted.

In some embodiments, the first signal is used to indicate whether the terminal device is required to detect the control channel and a manner for detecting the control channel. The terminal device includes a first receiver and a second receiver. Here, power consumption of the first receiver is less than power consumption of the second receiver. For example, as illustrated in FIG. 2, the first receiver may also be referred to as a wake up receiver, and the second receiver may also be referred to as a primary receiver. Optionally, the manner for detecting the control channel includes at least one of: an occasion for detecting the control channel, a duration for detecting the control channel, a period for detecting the control channel, or the number of times for detecting the control channel.

In some embodiments, the first signal is used to indicate that, in a case where it is required to wake up the second receiver to detect the control channel, the terminal device wakes up the second receiver, and controls the second receiver to enter the sleep state after the detection ends. It should be understood that, in the case where it is not required to wake up the second receiver to detect the control channel, the first receiver does not wake up the second receiver and the second receiver remains in the sleep state.

In some embodiments, the first signal may also be referred to as a wake up signal. The wake up signal is received by a wake up receiver with lower power consumption. The wake up signal is used to indicate that, in a case where it is required to wake up the primary receiver of the terminal device to detect the control channel, the terminal device wakes up the primary receiver with higher power consumption, and controls the primary receiver to enter a sleep state after the detection ends. It should be understood that, in the case where it is not required to wake up the primary receiver of the terminal device to detect the control channel, the wake up receiver does not wake up the primary receiver and the primary receiver will remain in the sleep state.

In some embodiments, the control channel includes a PDCCH and a sidelink control channel. In the embodiments of the present application, the PDCCH is used as an example for illustration.

In some embodiments, a waveform of the first signal is different from a waveform of the control channel. Optionally, the waveform of the first signal is a first waveform corresponding to a single-carrier signal, and the waveform of the control channel is a second waveform corresponding to a multi-carrier signal. Here, the single-carrier refers to a modulation technique that uses only one carrier within a fixed frequency band, e.g., 2-ASK. The multi-carrier refers to a modulation technique that uses multiple carriers within a fixed frequency band, e.g., OFDM.

In some embodiments, a modulation scheme of the first signal is different from a modulation scheme of the control channel. Optionally, the first signal is obtained by using a single-carrier modulation scheme. The control channel is obtained by using a multi-carrier modulation scheme, that is, control signaling carried on the control channel is obtained by using a multi-carrier modulation scheme. Optionally, the first signal is obtained by using a target modulation scheme.

In some embodiments, the target modulation scheme used for modulation to obtain the first signal includes at least one of:
- single-carrier amplitude modulation;
- single-carrier frequency modulation; or
- single-carrier phase modulation.

In some embodiments, the first signal carries a first identifier of a target terminal device. In a case where the first signal carries the first identifier of the target terminal device, the first signal is received by the target terminal device through the first receiver. In some embodiments, the first signal carries a second identifier of a target terminal device group. In a case where the first signal carries the second identifier of the target terminal device group, the first identifier is received by all or part of terminal devices in the target terminal device group through the first receiver.

In summary, according to the method provided in the embodiment, by transmitting the first signal, the terminal device is enabled to control the second receiver to detect the control channel based on the indication of the first signal, so as to ensure that the terminal device controls the second receiver to detect the control channel only in a case where there is data transmission, thereby achieving better power-saving effects.

In some embodiments, the first signal carries a detection parameter of the control channel.

In some embodiments, the detection parameter of the control channel carried in the first signal includes at least one of:
- a start detection indication;
- a detection duration;
- a detection period;
- a detection count; or
- a first search space set.

Optionally, the detection parameter of the control channel carried in the first signal includes the start detection indication. The start detection indication is used to indicate a start occasion for the second receiver to detect the control channel. For example, the start detection indication is used to indicate the second receiver to start detecting the control channel in the first time domain unit.

In some embodiments, the first time domain unit is a time domain unit in which the first signal is received. In some embodiments, considering that it takes a certain amount of time to wake up the second receiver, the first time domain unit is an N-th time domain unit after the first signal. A value of N is a positive integer. It should be understood that, assuming the first signal is received in the 1st time domain unit, then the first time domain unit being the N-th time domain unit after the first signal means that the first time domain unit is actually the (N+1)-th time domain unit. For example, as illustrated in FIG. 6, the (N+1)-th time domain unit is the N-th time domain unit after the 1st time domain unit. In some embodiments, N is determined based on higher layer configuration, or N is determined based on a system parameter of the communication system.

Optionally, N is determined based on higher layer configuration. For example, assuming the first signal is received in the 1st time domain unit and higher layer configuration sets N=5, then the second receiver will start detecting the control channel in the 6th time domain unit. Optionally, N is determined according to the system parameter of the communication system. For example, the system parameter indicates a target subcarrier spacing, and it is determined that the second receiver will start detecting the control channel in the N-th time domain unit based on the target subcarrier spacing. Optionally, different subcarrier spacings correspond to different values of N.

Optionally, the detection parameter of the control channel carried in the first signal includes the detection duration. The detection duration is used to indicate the second receiver to detect the control channel for a fixed duration. For example, the detection duration is used to indicate the second receiver to detect the control channel between a first moment and a second moment, where the second moment is a moment after the first moment. It should be understood that the second receiver is in an active state during the detection duration and is in the sleep state outside the detection duration. That is, the second receiver is in the active state between the first moment and the second moment, and the second receiver enters the sleep state from the active state after the second moment. In some embodiments, the detection duration is defined for each detection period, and a duration corresponding to the active period within each detection period is the detection duration.

In some embodiments, the terminal monitors the detection duration based on a first timer; and in a case where the first timer expires, it is determined that the duration for which the second receiver detects the control channel reaches the detection duration. In this case, the second receiver stops detecting the control channel and enters the sleep state from the active state. The terminal device resumes detecting the first signal by the first receiver. For example, as illustrated in FIG. 7, the detection duration equals the duration corresponding to the active state within each detection period. The second receiver is in the active state during the detection duration and switches from the active state to the sleep state after the duration for detecting the control channel within each detection period reaches the detection duration.

Optionally, the detection parameter of the control channel carried in the first signal includes the detection period. The detection period is used to indicate the second receiver to detect the control channel at a fixed period. For example, the detection period is used to indicate the second receiver to detect the control channel every target duration. Optionally, the target duration is determined based on high layer configuration, or the target duration is determined based on a system parameter of the communication system.

In some embodiments, the second receiver detects the control channel within the active period indicated by the detection period. The active period is used to control or limit the time period during which the second receiver detects the control channel. It should be understood that the second receiver is in the active state during the active period and is in the sleep state outside the active period. That is, when entering the active period, the second receiver enters the active state from the sleep state; and at the moment the active period ends, the second receiver enters the sleep state from the active state and resumes detecting the first signal by the first receiver.

In some embodiments, the second receiver is controlled to enter the sleep state outside the active period within the detection period and the first signal is received by the first receiver; and/or, the second receiver is controlled to enter the sleep state during the sleep period within the detection period and the first signal is received by the first receiver. For example, as illustrated in FIG. 8, each detection period includes an active period corresponding to the active state and a sleep period corresponding to the sleep state, and the second receiver is in the active state during the active period and switches from the active state to the sleep state during the sleep period. During the sleep period, the first signal is detected by the first receiver. During the active period, the first receiver may remain awake or enter the sleep state.

Optionally, the detection parameter of the control channel carried in the first signal includes the detection count. The detection count is used to indicate the number of times the second receiver detects the control channel. Optionally, the second receiver is in the active state when the number of times the second receiver detects the control channel is within the detection count. After the number of times the second receiver detects the control channel reaches the detection count, the second receiver switches from the active state to the sleep state. In some embodiments, the second receiver detects the control channel within the detection count. The detection count is used to control or limit the number of times the second receiver detects the control channel. In some embodiments, the detection count is defined for each detection period and is used to indicate the number of detections required within the active period of each detection period.

In some embodiments, the detection count is monitored based on a second timer. In a case where the second timer expires, it is determined that the number of times the second receiver detects the control channel reaches the detection count. In this case, the second receiver stops detecting the control channel and enters the sleep state from the active state. The terminal device resumes receiving the first signal by the first receiver.

In some embodiments, the detection count equals the number of times the second receiver detects the control channel during the active period within each detection period. For example, as illustrated in FIG. 9, assuming the detection count is 3, the second receiver remains the active state from the start of the first detection until the end of the third detection, and switches from the active state to the sleep state after the third detection ends.

In some embodiments, the detection parameter of the control channel carried in the first signal includes a first search space set.

In some embodiments, the first search space set is used to indicate that the terminal device switches to the first search space set by the second receiver to detect the control channel.

In some embodiments, the first search space set is a target location indicated by the first signal for the second receiver to detect the control channel. In a case where the detection parameter of the control channel carried in the first signal includes the first search space set, it is switched to the first search space set by the second receiver to detect the control channel.

In summary, according to the method provided in the embodiment, by transmitting the detection parameter of the control channel carried in the first signal to the terminal device, it is ensured that the terminal device controls the second receiver to detect the control channel only in a case where there is data transmission; and in a case where there is no data transmission, the second receiver enters the sleep state and only the first receiver with lower power consumption will be utilized, thereby achieving better power-saving effects.

In some embodiments, the above method further includes the following.

In step 840: a control channel is transmitted.

In some embodiments, the control channel is used to indicate to the terminal device a manner for performing subsequent control channel detection, for example, including indicating the terminal device to control the second receiver to continue detecting the control channel, or indicating the terminal device to control the second receiver to interrupt detection and enter the sleep state, or indicating the terminal device to switch from the current search space to a target search space by the second receiver to perform the detection of the control channel.

In some embodiments, the control channel includes at least one of:
- a skipping indication;
- a sleep indication; or
- a fourth search space set.

Optionally, the control channel includes the skipping indication.

In some embodiments, the skipping indication is used to indicate the terminal device to control the second receiver to enter the sleep state. That is, in a case of receiving the skipping indication, the terminal device controls the second receiver to no longer perform detection of the control channel. In this case, the second receiver stops detecting the control channel and enters the sleep state from the active state. The terminal device resumes receiving the first signal by the first receiver.

Optionally, the control channel includes the sleep indication.

In some embodiments, the sleep indication is used to indicate the terminal device to control the second receiver to enter the sleep state. That is, in a case of receiving the sleep indication, the terminal device controls the second receiver to no longer perform detection of the control channel. In this case, the second receiver stops detecting the control channel and enters the sleep state from the active state. The terminal device resumes receiving the first signal by the first receiver.

Optionally, the control channel includes the fourth search space set.

In some embodiments, the fourth search space set is used to indicate the terminal device to switch to the fourth search space set by the second receiver to detect the control channel. The fourth search space set is a target location indicated by the control channel for the second receiver to detect the control channel. It is switched to the fourth search space set by the second receiver to detect the control channel in a case where the control channel carries the fourth search space set.

In summary, according to the method provided in the embodiment, by transmitting the indication of the control channel to the terminal device, the terminal device is enabled to perform the subsequent control channel detection based on the indication of the control channel, so as to ensure that the terminal device controls the second receiver to detect the control channel only in a case where there is data transmission; and in a case where there is no data transmission, the second receiver enters the sleep state and only the first receiver with lower power consumption is utilized, thereby achieving better power-saving effects.

FIG. 14 illustrates a structural block diagram of an apparatus for detecting a control channel provided in an exemplary embodiment of the present application. The apparatus includes a receiving module 1410 and a control module 1420.

The receiving module 1410 is configured to receive a first signal by a first receiver.

In some embodiments, the apparatus includes the first receiver and a second receiver. Here, power consumption of the first receiver is less than power consumption of the second receiver. For example, as illustrated in FIG. 2, the first receiver may also be referred to as a wake up receiver, and the second receiver may also be referred to as a primary receiver. The first signal received by the first receiver is used to indicate whether the apparatus is required to detect a control channel and a manner for detecting the control channel. Optionally, the manner for detecting the control channel includes at least one of: an occasion for detecting the control channel, a duration for detecting the control channel (abbreviated as detection duration), a period for detecting the control channel (abbreviated as detection period), or the number of times for detecting the control channel (referred to as detection count).

In some embodiments, the first signal is used to indicate that, in a case where it is required to wake up the second receiver to detect the control channel, the apparatus wakes up the second receiver, and controls the second receiver to enter a sleep state after the detection ends. It should be understood that, in the case where it is not required to wake up the second receiver to detect the control channel, the first receiver does not wake up the second receiver and the second receiver remains in the sleep state.

In some embodiments, the first signal may also be referred to as a wake up signal. The wake up signal is received by a wake up receiver with lower power consumption. The wake up signal is used to indicate that, in a case where it is required to wake up the primary receiver of the apparatus to detect the control channel, the apparatus wakes up the primary receiver with higher power consumption, and controls the primary receiver to enter a sleep state after the detection ends. It should be understood that, in the case where it is not required to wake up the primary receiver of the apparatus to detect the control channel, the wake up receiver does not wake up the primary receiver and the primary receiver will remain in the sleep state.

In some embodiments, the control channel includes a PDCCH and a sidelink control channel. In the embodiments of the present application, the PDCCH is used as an example for illustration.

In some embodiments, a waveform of the first signal is different from a waveform of the control channel. Optionally, the waveform of the first signal is a first waveform corresponding to a single-carrier signal, and the waveform of the control channel is a second waveform corresponding to a multi-carrier signal. Here, the single-carrier refers to a modulation technique that uses only one carrier within a fixed frequency band, e.g., 2-ASK. The multi-carrier refers to a modulation technique that uses multiple carriers within a fixed frequency band, e.g., OFDM.

In some embodiments, a modulation scheme of the first signal is different from a modulation scheme of the control channel. Optionally, the first signal is obtained by using a single-carrier modulation scheme. The control channel is obtained by using a multi-carrier modulation scheme, that is, control signaling carried on the control channel is obtained by using a multi-carrier modulation scheme. Optionally, the first signal is obtained by using a target modulation scheme.

In some embodiments, the target modulation scheme used for modulation to obtain the first signal includes at least one of:
- single-carrier amplitude modulation;
- single-carrier frequency modulation; or
- single-carrier phase modulation.

In some embodiments, the first signal carries a first identifier of a target terminal device. In a case where the first signal carries the first identifier of the target terminal device, the first signal is received by the target terminal device through the first receiver. In some embodiments, the first signal carries a second identifier of a target terminal device group. In a case where the first signal carries the second identifier of the target terminal device group, the first identifier is received by all or part of terminal devices in the target terminal device group through the first receiver.

The control module 1420 is configured to control the second receiver to detect the control channel based on an indication of the first signal.

In some embodiments, the first signal is used to indicate the second receiver to detect the control channel or to indicate the second receiver not to detect the control channel.

Optionally, the apparatus, based on the indication of detecting the control channel in the first signal, wakes up the second receiver to detect the control channel, and controls the second receiver to enter the sleep state after detection ends. Optionally, the apparatus, based on the indication of not detecting the control channel in the first signal, does not wake up the second receiver, keeping the second receiver continuously in the sleep state.

Optionally, the first receiver enters the sleep state in a case where the second receiver detects the control channel.

In some embodiments, the first signal carries a detection parameter of the control channel.

The control module 1420 is further configured to control the second receiver to detect the control channel based on the detection parameter of the control channel carried in the first signal.

In some embodiments, the detection parameter of the control channel carried in the first signal includes at least one of:
- a start detection indication;
- a detection duration;
- a detection period;
- a detection count; or
- a first search space set.

The control module 1420 is further configured to control the second receiver to start detecting the control channel in a first time domain unit based on the start detection indication.

Optionally, the detection parameter of the control channel carried in the first signal includes the start detection indication. The start detection indication is used to indicate a start occasion for the second receiver to detect the control channel. For example, the start detection indication is used to indicate the second receiver to start detecting the control channel in the first time domain unit.

In some embodiments, the first time domain unit is a time domain unit in which the first signal is received. In some embodiments, considering that it takes a certain amount of time to wake up the second receiver, the first time domain unit is an N-th time domain unit after the first signal. A value of N is a positive integer. It should be understood that, assuming the first signal is received in the 1st time domain unit, then the first time domain unit being the N-th time domain unit after the first signal means that the first time domain unit is actually the (N+1)-th time domain unit. For example, as illustrated in FIG. 6, the (N+1)-th time domain unit is the N-th time domain unit after the 1st time domain unit. In some embodiments, N is determined based on higher layer configuration, or N is determined based on a system parameter of the communication system.

Optionally, N is determined based on higher layer configuration. For example, assuming the first signal is received in the 1st time domain unit and higher layer configuration sets N=5, then the second receiver will start detecting the control channel in the 6th time domain unit. Optionally, N is determined according to the system parameter of the communication system. For example, the system parameter indicates a target subcarrier spacing, and it is determined that the second receiver will start detecting the control channel in the N-th time domain unit based on the target subcarrier spacing. Optionally, different subcarrier spacings correspond to different values of N.

The control module 1420 is further configured to, in a case where a duration for which the second receiver detects the control channel reaches the detection duration, control the second receiver to enter the sleep state and detect the first signal by the first receiver.

Optionally, the detection parameter of the control channel carried in the first signal includes the detection duration. The detection duration is used to indicate the second receiver to detect the control channel for a fixed duration. For example, the detection duration is used to indicate the second receiver to detect the control channel between a first moment and a second moment, where the second moment is a moment after the first moment. It should be understood that the second receiver is in an active state during the detection duration and is in the sleep state outside the detection duration. That is, the second receiver is in the active state between the first moment and the second moment, and the second receiver enters the sleep state from the active state after the second moment. In some embodiments, the detection duration is defined for each detection period, and a duration corresponding to the active period within each detection period is the detection duration.

In some embodiments, the detection duration is monitored based on a first timer; and in a case where the first timer expires, it is determined that the duration for which the second receiver detects the control channel reaches the detection duration. In this case, the second receiver stops detecting the control channel and enters the sleep state from the active state. The terminal device resumes detecting the first signal by the first receiver. For example, as illustrated in FIG. 7, the detection duration equals the duration corresponding to the active state within each detection period. The second receiver is in the active state during the detection duration and switches from the active state to the sleep state after the duration for detecting the control channel within each detection period reaches the detection duration.

The control module 1420 is further configured to control the second receiver to enter the sleep state outside the active period indicated by the detection period and detect the first signal by the first receiver.

Optionally, the detection parameter of the control channel carried in the first signal includes the detection period. The detection period is used to indicate the second receiver to detect the control channel at a fixed period. For example, the detection period is used to indicate the second receiver to detect the control channel every target duration. Optionally, the target duration is determined based on a high layer configuration, or the target duration is determined based on a system parameter of the communication system.

In some embodiments, the second receiver detects the control channel within the active period indicated by the detection period. The active period is used to control or limit the time period during which the second receiver detects the control channel. It should be understood that the second receiver is in the active state during the active period and is in the sleep state outside the active period. That is, when entering the active period, the second receiver enters the active state from the sleep state; and at the moment the active period ends, the second receiver enters the sleep state from the active state and resumes detecting the first signal by the first receiver.

In some embodiments, the second receiver is controlled to enter the sleep state outside the active period within the detection period and the first signal is received by the first receiver; and/or, the second receiver is controlled to enter the sleep state during the sleep period within the detection period and the first signal is received by the first receiver. For example, as illustrated in FIG. 8, each detection period includes an active period corresponding to the active state and a sleep period corresponding to the sleep state, and the second receiver is in the active state during the active period and switches from the active state to the sleep state during the sleep period. During the sleep period, the first signal is detected by the first receiver. During the active period, the first receiver may remain awake or enter the sleep state.

The control module 1420 is further configured to, in a case where the number of times the second receiver detects the control channel reaches the detection count, control the second receiver to enter the sleep state and detect the first signal by the first receiver.

Optionally, the detection parameter of the control channel carried in the first signal includes the detection count. The detection count is used to indicate the number of times the second receiver detects the control channel. Optionally, the second receiver is in the active state when the number of times the second receiver detects the control channel is within the detection count. After the number of times the second receiver detects the control channel reaches the detection count, the second receiver switches from the active state to the sleep state.

In some embodiments, the second receiver detects the control channel within the detection count. The detection count is used to control or limit the number of times the second receiver detects the control channel. In some embodiments, the detection count is defined for each detection period and is used to indicate the number of detections required within the active period of each detection period.

In some embodiments, the detection count is monitored based on a second timer. In a case where the second timer expires, it is determined that the number of times the second receiver detects the control channel reaches the detection count. In this case, the second receiver stops detecting the control channel and enters the sleep state from the active state. The terminal device resumes receiving the first signal by the first receiver.

In some embodiments, the detection count equals the number of times the second receiver detects the control channel during the active period within each detection period. For example, as illustrated in FIG. 9, assuming the detection count is 3, the second receiver remains the active state from the start of the first detection until the end of the third detection, and switches from the active state to the sleep state after the third detection ends.

The control module 1420 is further configured to end detection of the control channel by the second receiver in a second time domain unit.

Optionally, in a case where the detection parameter of the control channel carried in the first signal does not include the detection duration, the detection of the control channel is ended by the second receiver in the second time domain unit.

Optionally, in a case where the detection parameter of the control channel carried in the first signal does not include the detection period, the detection of the control channel is ended by the second receiver in the second time domain unit.

Optionally, in a case where the detection parameter of the control channel carried in the first signal does not include the detection count, the detection of the control channel is ended by the second receiver in the second time domain unit.

Optionally, in a case where the detection parameter of the control channel carried in the first signal does not include the detection duration and the detection period, the detection of the control channel is ended by the second receiver in the second time domain unit.

Optionally, in a case where the detection parameter of the control channel carried in the first signal does not include the detection duration and the detection count, the detection of the control channel is ended by the second receiver in the second time domain unit.

Optionally, in a case where the detection parameter of the control channel carried in the first signal does not include the detection count and the detection period, the detection of the control channel is ended by the second receiver in the second time domain unit.

Optionally, in a case where the detection parameter of the control channel carried in the first signal does not include the detection duration, the detection period and the detection count, the detection of the control channel is ended by the second receiver in the second time domain unit.

In some embodiments, the second time domain unit is an M-th time domain unit after the first time domain unit. In some embodiments, the first time domain unit is a time domain unit in which the first signal is received. In some embodiments, considering that it takes a certain amount of time to wake up the second receiver, the first time domain unit is an N-th time domain unit after the first signal. The value of N is a positive integer. It should be understood that, assuming the first signal is received in the 1st time domain unit, then the first time domain unit being the N-th time domain unit after the first signal means that the first time domain unit is actually the (N+1)-th time domain unit. For example, as illustrated in FIG. 6, the (N+1)-th time domain unit is the N-th time domain unit after the 1st time domain unit. In some embodiments, N is determined based on higher layer configuration, or N is determined based on the system parameter of the communication system.

Optionally, N is determined based on higher layer configuration. For example, assuming the first signal is received in the 1st time domain unit and higher layer configuration sets N=5, then the second receiver will start detecting the control channel in the 6th time domain unit. Optionally, N is determined according to the system parameter of the communication system. For example, the system parameter indicates a target subcarrier spacing, and it is determined that the second receiver will start detecting the control channel in the N-th time domain unit based on the target subcarrier spacing. Optionally, different subcarrier spacings correspond to different values of N.

It should be understood that, assuming the first time domain unit is the (N+1)-th time domain unit, the second time domain unit is the M-th time domain unit after the first time domain unit, that is, the second time domain unit is actually the (M+N+1)-th time domain unit, where the value of M is a positive integer. In some embodiments, M is determined based on higher layer configuration, or M is determined based on a system parameter of the communication system.

Optionally, the detection parameter of the control channel carried in the first signal includes a search space set. The search space set is used to indicate a location where the second receiver detects the control channel.

In some embodiments, the detection parameter of the control channel carried in the first signal includes a first search space set.

The control module 1420 is further configured to switch to the first search space set by the second receiver to detect the control channel.

In some embodiments, the first search space set is a target location indicated by the first signal for the second receiver to detect the control channel. In a case where the detection parameter of the control channel carried in the first signal includes the first search space set, it is switched to the first search space set by the second receiver to detect the control channel.

The control module 1420 is further configured to detect the control channel by the second receiver according to a default second search space set, or detect the control channel by the second receiver according to a third search space set used before sleeping.

Optionally, in a case where the detection parameter of the control channel carried in the first signal does not include the search space set, the control channel is detected by the second receiver according to the default second search space set. In some embodiments, the default second search space set is determined based on higher layer configuration, or the default second search space set is determined based on a system parameter.

Optionally, in a case where the detection parameter of the control channel carried in the first signal does not include the search space set, the control channel is detected by the second receiver according to the third search space set used before sleeping. It should be understood that the third search space set is a search space set used by the second receiver during its last control channel detection. For example, when detecting the control channel for the first time, the second receiver uses search space set 1, and enters the sleep state after the first detection ends, and then when detecting the control channel for the second time, since the detection parameter of the control channel carried in the first signal does not include the search space set, the second receiver still uses search space set 1 to detect the control channel.

The control module 1420 is further configured to perform subsequent control channel detection based on an indication of the control channel in a case where the control channel is detected.

In some embodiments, in a case where the apparatus detects the control channel, the apparatus receives the indication of the control channel, and the indication of the control channel is used to instruct the apparatus on how to perform subsequent control channel detection, for example, including indicating the apparatus to control the second receiver to continue detecting the control channel, or indicating the apparatus to control the second receiver to interrupt detection and enter the sleep state, or indicating the apparatus to switch from the current search space to a target search space by the second receiver to perform the detection of the control channel.

In some embodiments, the indication of the control channel includes at least one of:
- a skipping indication;
- a sleep indication; or
- a fourth search space set.

Optionally, the indication of the control channel includes the skipping indication.

The control module 1420 is further configured to control the second receiver to enter the sleep state based on the skipping indication in a case where the detected control channel carries the skipping indication.

In some embodiments, the skipping indication is used to indicate the apparatus to control the second receiver to enter the sleep state. That is, in a case of receiving the skipping indication, the apparatus controls the second receiver to no longer perform detection of the control channel. In this case, the second receiver stops detecting the control channel and enters the sleep state from the active state. The apparatus resumes receiving the first signal by the first receiver.

Optionally, the indication of the control channel includes the sleep indication.

The control module 1420 is further configured to control the second receiver to enter the sleep state based on the sleep indication in a case where the detected control channel carries the sleep indication.

In some embodiments, the sleep indication is used to indicate the apparatus to control the second receiver to enter the sleep state. That is, in a case of receiving the sleep indication, the apparatus controls the second receiver to no longer perform detection of the control channel. In this case, the second receiver stops detecting the control channel and enters the sleep state from the active state. The apparatus resumes receiving the first signal by the first receiver.

Optionally, the indication of the control channel includes the search space set.

The control module 1420 is further configured to switch to the fourth search space set by the second receiver to detect the control channel in a case where the detected control channel carries the fourth search space set.

In some embodiments, the fourth search space set is a target location indicated by the control channel for the second receiver to detect the control channel. It is switched to the fourth search space set by the second receiver to detect the control channel in a case where the control channel carries the fourth search space set.

The control module 1420 is further configured to control the second receiver to detect the control channel in a case where reception of the first signal fails.

In some embodiments, the first receiver receives the first signal, and there may be a case of reception success or a case of reception failure.

The control module 1420 is further configured to control the second receiver to detect the control channel in a case where a signal quality of the first signal does not meet a quality threshold.

In some embodiments, the first receiver receives the first signal, and in a case of successful reception, there is a case where the signal quality of the received first signal meets the quality threshold or the signal quality of the received first signal does not meet the quality threshold.

In some embodiments, the signal quality is determined by at least one of: RSRP, RSRQ, or SINR. Here, RSRP refers to an average value of a received signal power on all REs carrying a reference signal within any one symbol. In a case where RSRP is relatively high, it reflects that the received signal power is relatively large and the signal quality is relatively good; and in a case where RSRP is relatively low, it reflects that the received signal power is relatively small and the signal quality is relatively poor. In a case where RSRQ is relatively high, it reflects that receiving quality of the reference signal is relatively good and the signal quality is relatively good; and in a case where RSRQ is relatively low, it reflects that receiving quality of the reference signal is relatively poor and the signal quality is relatively poor. SINR refers to a ratio of signal to noise. In a case where the ratio of signal to noise is relatively high, it reflects that there is less noise and signal quality is relatively good; and in a case where the ratio of signal to noise is relatively low, it reflects that there is more noise and signal quality is relatively poor.

In some embodiments, the apparatus further includes a transmitting module configured to transmit a response result of the first signal.

FIG. 15 illustrates a structural block diagram of an apparatus for detecting a control channel provided in an exemplary embodiment of the present application. The apparatus includes a transmitting module 1510.

The transmitting module 1510 is configured to transmit a first signal.

In some embodiments, the first signal is used to indicate whether the terminal device is required to detect the control channel and a manner for detecting the control channel. The terminal device includes a first receiver and a second receiver. Here, power consumption of the first receiver is less than power consumption of the second receiver. For example, as illustrated in FIG. 2, the first receiver may also be referred to as a wake up receiver, and the second receiver may also be referred to as a primary receiver. Optionally, the manner for detecting the control channel includes at least one of: an occasion for detecting the control channel, a duration for detecting the control channel, a period for detecting the control channel, or the number of times for detecting the control channel.

In some embodiments, the first signal is used to indicate that, in a case where it is required to wake up the second receiver to detect the control channel, the terminal device wakes up the second receiver, and controls the second receiver to enter the sleep state after the detection ends. It should be understood that, in the case where it is not required to wake up the second receiver to detect the control channel, the first receiver does not wake up the second receiver and the second receiver remains in the sleep state.

In some embodiments, the first signal may also be referred to as a wake up signal. The wake up signal is received by a wake up receiver with lower power consumption. The wake up signal is used to indicate that, in a case where it is required to wake up the primary receiver of the terminal device to detect the control channel, the terminal device wakes up the primary receiver with higher power consumption, and controls the primary receiver to enter a sleep state after the detection ends. It should be understood that, in the case where it is not required to wake up the primary receiver of the terminal device to detect the control channel, the wake up receiver does not wake up the primary receiver and the primary receiver will remain in the sleep state.

In some embodiments, the control channel includes a PDCCH and a sidelink control channel. In the embodiments of the present application, the PDCCH is used as an example for illustration.

In some embodiments, a waveform of the first signal is different from a waveform of the control channel. Optionally, the waveform of the first signal is a first waveform corresponding to a single-carrier signal, and the waveform of the control channel is a second waveform corresponding to a multi-carrier signal. Here, the single-carrier refers to a modulation technique that uses only one carrier within a fixed frequency band, e.g., 2-ASK. The multi-carrier refers to a modulation technique that uses multiple carriers within a fixed frequency band, e.g., OFDM.

In some embodiments, a modulation scheme of the first signal is different from a modulation scheme of the control channel. Optionally, the first signal is obtained by using a single-carrier modulation scheme. The control channel is obtained by using a multi-carrier modulation scheme, that is, control signaling carried on the control channel is obtained by using a multi-carrier modulation scheme. Optionally, the first signal is obtained by using a target modulation scheme.

In some embodiments, the target modulation scheme used for modulation to obtain the first signal includes at least one of:
- single-carrier amplitude modulation;
- single-carrier frequency modulation; or
- single-carrier phase modulation.

In some embodiments, the first signal carries a first identifier of a target terminal device. In a case where the first signal carries the first identifier of the target terminal device, the first signal is received by the target terminal device through the first receiver. In some embodiments, the first signal carries a second identifier of a target terminal device group. In a case where the first signal carries the second identifier of the target terminal device group, the first identifier is received by all or part of terminal devices in the target terminal device group through the first receiver.

In some embodiments, the first signal carries a detection parameter of the control channel.

In some embodiments, the detection parameter of the control channel carried in the first signal includes at least one of:
- a start detection indication;
- a detection duration;
- a detection period;
- a detection count; or
- a first search space set.

Optionally, the detection parameter of the control channel carried in the first signal includes the start detection indication. The start detection indication is used to indicate a start occasion for the second receiver to detect the control channel. For example, the start detection indication is used to indicate the second receiver to start detecting the control channel in the first time domain unit.

In some embodiments, the first time domain unit is a time domain unit in which the first signal is received. In some embodiments, considering that it takes a certain amount of time to wake up the second receiver, the first time domain unit is an N-th time domain unit after the first signal. A value of N is a positive integer. It should be understood that, assuming the first signal is received in the 1st time domain unit, then the first time domain unit being the N-th time domain unit after the first signal means that the first time domain unit is actually the (N+1)-th time domain unit. For example, as illustrated in FIG. 6, the (N+1)-th time domain unit is the N-th time domain unit after the 1st time domain unit. In some embodiments, N is determined based on higher layer configuration, or N is determined based on a system parameter of the communication system.

Optionally, N is determined based on higher layer configuration. For example, assuming the first signal is received in the 1st time domain unit and higher layer configuration sets N=5, then the second receiver will start detecting the control channel in the 6th time domain unit. Optionally, N is determined according to the system parameter of the communication system. For example, the system parameter indicates a target subcarrier spacing, and it is determined that the second receiver will start detecting the control channel in the N-th time domain unit based on the target subcarrier spacing. Optionally, different subcarrier spacings correspond to different values of N.

Optionally, the detection parameter of the control channel carried in the first signal includes the detection duration. The detection duration is used to indicate the second receiver to detect the control channel for a fixed duration. For example, the detection duration is used to indicate the second receiver to detect the control channel between a first moment and a second moment, where the second moment is a moment after the first moment. It should be understood that the second receiver is in an active state during the detection duration and is in the sleep state outside the detection duration. That is, the second receiver is in the active state between the first moment and the second moment, and the second receiver enters the sleep state from the active state after the second moment. In some embodiments, the detection duration is defined for each detection period, and a duration corresponding to the active period within each detection period is the detection duration.

In some embodiments, the terminal monitors the detection duration based on a first timer; and in a case where the first timer expires, it is determined that the duration for which the second receiver detects the control channel reaches the detection duration. In this case, the second receiver stops detecting the control channel and enters the sleep state from the active state. The terminal device resumes detecting the first signal by the first receiver. For example, as illustrated in FIG. 7, the detection duration equals the duration corresponding to the active state within each detection period. The second receiver is in the active state during the detection duration and switches from the active state to the sleep state after the duration for detecting the control channel within each detection period reaches the detection duration.

Optionally, the detection parameter of the control channel carried in the first signal includes the detection period. The detection period is used to indicate the second receiver to detect the control channel at a fixed period. For example, the detection period is used to indicate the second receiver to detect the control channel every target duration. Optionally, the target duration is determined based on high layer configuration, or the target duration is determined based on a system parameter of the communication system.

In some embodiments, the second receiver detects the control channel within the active period indicated by the detection period. The active period is used to control or limit the time period during which the second receiver detects the control channel. It should be understood that the second receiver is in the active state during the active period and is in the sleep state outside the active period. That is, when entering the active period, the second receiver enters the active state from the sleep state; and at the moment the active period ends, the second receiver enters the sleep state from the active state and resumes detecting the first signal by the first receiver.

In some embodiments, the second receiver is controlled to enter the sleep state outside the active period within the detection period and the first signal is received by the first receiver; and/or, the second receiver is controlled to enter the sleep state during the sleep period within the detection period and the first signal is received by the first receiver. For example, as illustrated in FIG. 8, each detection period includes an active period corresponding to the active state and a sleep period corresponding to the sleep state, and the second receiver is in the active state during the active period and switches from the active state to the sleep state during the sleep period. During the sleep period, the first signal is detected by the first receiver. During the active period, the first receiver may remain awake or enter the sleep state.

Optionally, the detection parameter of the control channel carried in the first signal includes the detection count. The detection count is used to indicate the number of times the second receiver detects the control channel. Optionally, the second receiver is in the active state when the number of times the second receiver detects the control channel is within the detection count. After the number of times the second receiver detects the control channel reaches the detection count, the second receiver switches from the active state to the sleep state.

In some embodiments, the second receiver detects the control channel within the detection count. The detection count is used to control or limit the number of times the second receiver detects the control channel. In some embodiments, the detection count is defined for each detection period and is used to indicate the number of detections required within the active period of each detection period.

In some embodiments, the detection count is monitored based on a second timer. In a case where the second timer expires, it is determined that the number of times the second receiver detects the control channel reaches the detection count. In this case, the second receiver stops detecting the control channel and enters the sleep state from the active state. The terminal device resumes receiving the first signal by the first receiver.

In some embodiments, the detection count equals the number of times the second receiver detects the control channel during the active period within each detection period. For example, as illustrated in FIG. 9, assuming the detection count is 3, the second receiver remains the active state from the start of the first detection until the end of the third detection, and switches from the active state to the sleep state after the third detection ends.

In some embodiments, the detection parameter of the control channel carried in the first signal includes a first search space set.

In some embodiments, the first search space set is used to indicate that the terminal device switches to the first search space set by the second receiver to detect the control channel.

In some embodiments, the first search space set is a target location indicated by the first signal for the second receiver to detect the control channel. In a case where the detection parameter of the control channel carried in the first signal includes the first search space set, it is switched to the first search space set by the second receiver to detect the control channel.

The transmitting module 1510 is further configured to transmit the control channel.

In some embodiments, the control channel is used to indicate to the terminal device a manner for performing subsequent control channel detection, for example, including indicating the terminal device to control the second receiver to continue detecting the control channel, or indicating the terminal device to control the second receiver to interrupt detection and enter the sleep state, or indicating the terminal device to switch from the current search space to a target search space by the second receiver to perform the detection of the control channel.

In some embodiments, the control channel includes at least one of:
- a skipping indication;
- a sleep indication; or
- a fourth search space set.

Optionally, the control channel includes the skipping indication.

In some embodiments, the skipping indication is used to indicate the terminal device to control the second receiver to enter the sleep state. That is, in a case of receiving the skipping indication, the terminal device controls the second receiver to no longer perform detection of the control channel. In this case, the second receiver stops detecting the control channel and enters the sleep state from the active state. The terminal device resumes receiving the first signal by the first receiver.

Optionally, the control channel includes the sleep indication.

In some embodiments, the sleep indication is used to indicate the terminal device to control the second receiver to enter the sleep state. That is, in a case of receiving the sleep indication, the terminal device controls the second receiver to no longer perform detection of the control channel. In this case, the second receiver stops detecting the control channel and enters the sleep state from the active state. The terminal device resumes receiving the first signal by the first receiver.

Optionally, the control channel includes the fourth search space set.

In some embodiments, the fourth search space set is used to indicate the terminal device to switch to the fourth search space set by the second receiver to detect the control channel. The fourth search space set is a target location indicated by the control channel for the second receiver to detect the control channel. It is switched to the fourth search space set by the second receiver to detect the control channel in a case where the control channel carries the fourth search space set.

In some embodiments, the apparatus further includes a receiving module configured to receive the response result of the first signal.

It should be noted that when the apparatus provided in the above embodiments implements its functions, the division of each of the above functional modules is merely used as an example for illustration. In practical applications, the above functions may be allocated to be completed by different functional modules according to actual needs, that is, the internal structure of the device may be divided into different functional modules to complete all or part of the functions described above.

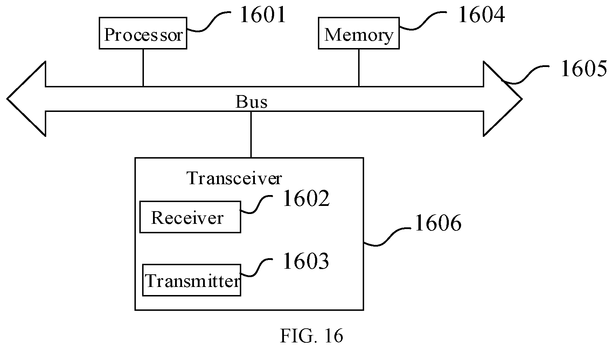

FIG. 16 illustrates a schematic structural diagram of a communication device (a terminal device or a network device) provided in an embodiment of the present application. The communication device may include: a processor 1601, a receiver 1602, a transmitter 1603, a memory 1604 and a bus 1605.

The processor 1601 includes one or more processing cores. The processor 1601 executes various functional applications and information processing by running software programs and modules.

The receiver 1602 and transmitter 1603 may be implemented as a transceiver 1606, and the transceiver 1606 may be a communication chip.

The memory 1604 is connected to the processor 1601 via the bus 1605. The memory 1604 may be configured to store a computer program, and the processor 1601 is configured to run the computer program to implement various steps performed by the Ambient IoT device, the terminal device or the network device in the method embodiments.

Furthermore, the memory 1604 may be implemented by any type of volatile or non-volatile storage device or a combination thereof, and the volatile or non-volatile storage device includes but not limited to: a random-access memory (RAM), a read-only memory (ROM), an erasable programmable read-only memory (EPROM), an electrically erasable programmable read-only memory (EEPROM), a flash memory or other solid-state storage technologies, a compact disc read-only memory (CD-ROM), a digital video disc (DVD) or other optical storage, a magnetic tape cartridge, a magnetic tape, a disk storage, or other magnetic storage device.

The embodiments of the present application further provide a computer-readable storage medium, the storage medium has a computer program stored thereon, and the computer program is executed by a processor of a terminal device or a network device to implement various steps in the method for detecting a control channel.

In some embodiments, the computer-readable storage medium may include: a ROM, a RAM, a solid state drive (SSD), a random access memory an optical discs, or the like. The random access memory may include a resistance random access memory (ReRAM) and a dynamic random access memory (DRAM).

The embodiments of the present application further provide a chip, and the chip includes a programmable logic circuit and/or program instructions. The chip, when operated on a terminal device or a network device, is configured to implement various steps in the method for detecting a control channel.

The embodiments of the present application further provide a computer program product or a computer program, the computer program product or the computer program includes computer instructions, and the computer instructions are stored on a computer-readable storage medium. The processor of a terminal device or a network device reads the computer instructions from the computer-readable storage medium and executes the computer instructions to implement various steps in the method for detecting a control channel.

Those skilled in the art should appreciate that in the one or more of the above examples, the functions described in the embodiments of the present application may be implemented in hardware, software, firmware or any combination thereof. When implemented in software, the functions may be stored on a computer-readable medium or transmitted as one or more instructions or codes on the computer-readable medium. The computer-readable medium includes both a computer storage medium and a communication medium, where the communication medium includes any medium that facilitates the transfer of a computer program from one place to another. The storage medium may be any available medium that can be accessed by a general-purpose or special-purpose computer.

The foregoing descriptions are merely exemplary embodiments of the present application and are not intended to limit the present application. Any modifications, equivalent substitutions, improvements or the like made within the spirit and principles of the present application shall fall within the scope of protection of the present application.

## Claims

1. A method for detecting a control channel, performed by a terminal device, wherein the terminal device comprises a first receiver and a second receiver, power consumption of the first receiver being less than power consumption of the second receiver; and the method comprises:
receiving a first signal by the first receiver; and
controlling the second receiver to detect the control channel based on an indication of the first signal.

2. The method according to claim 1, wherein the first signal carries a detection parameter of the control channel;
wherein controlling the second receiver to detect the control channel based on the indication of the first signal comprises:
controlling the second receiver to detect the control channel based on the detection parameter of the control channel carried in the first signal.

3. The method according to claim 2, wherein the detection parameter of the control channel comprises a start detection indication;
wherein controlling the second receiver to detect the control channel based on the detection parameter of the control channel carried in the first signal comprises:
controlling, based on the start detection indication, the second receiver to start detecting the control channel in a first time domain unit, the first time domain unit being an N-th time domain unit after the first signal;
wherein a value of N is a positive integer.

4. The method according to claim 3, wherein N is determined based on higher layer configuration, or N is determined based on a system parameter.

5. The method according to claim 2, wherein the detection parameter of the control channel comprises a detection duration;
wherein controlling the second receiver to detect the control channel based on the detection parameter of the control channel carried in the first signal comprises:
in a case where a duration for which the second receiver detects the control channel reaches the detection duration, controlling the second receiver to enter a sleep state and receiving the first signal by the first receiver.

6. The method according to claim 2, wherein the detection parameter of the control channel comprises a detection period;
wherein controlling the second receiver to detect the control channel based on the detection parameter of the control channel carried in the first signal comprises:
controlling the second receiver to enter a sleep state outside an active period within the detection period and receiving the first signal by the first receiver; and/or
controlling the second receiver to enter the sleep state during a sleep period within the detection period and receiving the first signal by the first receiver.

7. The method according to claim 2, wherein the detection parameter of the control channel comprises a detection count;
wherein controlling the second receiver to detect the control channel based on the detection parameter of the control channel carried in the first signal comprises:
in a case where a number of times the second receiver detects the control channel reaches the detection count, controlling the second receiver to enter a sleep state and receiving the first signal by the first receiver.

8. The method according to claim 2, wherein the detection parameter of the control channel comprises a first search space set;
wherein controlling the second receiver to detect the control channel based on the detection parameter of the control channel carried in the first signal comprises:
switching to the first search space set by the second receiver to detect the control channel.

9. The method according to claim 2, further comprising:
detecting the control channel by the second receiver according to a default second search space set; or detecting the control channel by the second receiver according to a third search space set used before sleeping.

10. The method according to claim 2, further comprising:
ending detection of the control channel by the second receiver in a second time domain unit, wherein the second time domain unit is an M-th time domain unit after a first time domain unit, and the first time domain unit is an N-th time domain unit after the first signal;
wherein a value of N is a positive integer, and a value of M is a positive integer.

11. The method according to claim 10, wherein N is determined based on higher layer configuration, or N is determined based on a system parameter.

12. The method according to claim 10, wherein M is determined based on higher layer configuration, or M is determined based on a system parameter.

13. The method according to any one of claims 1 to 12, further comprising:
performing subsequent control channel detection based on an indication of the control channel in a case where the control channel is detected.

14. The method according to claim 13, wherein performing the subsequent control channel detection based on the indication of the control channel in the case where the control channel is detected comprises at least one of:
controlling the second receiver to enter a sleep state based on a skipping indication in a case where the detected control channel carries the skipping indication;
controlling the second receiver to enter the sleep state based on a sleep indication in a case where the detected control channel carries the sleep indication; or
switching to a fourth search space set by the second receiver to detect the control channel in a case where the detected control channel carries the fourth search space set.

15. The method according to any one of claims 1 to 14, further comprising:
controlling the second receiver to detect the control channel in a case where reception of the first signal fails.

16. The method according to any one of claims 1 to 14, further comprising:
controlling the second receiver to detect the control channel in a case where a signal quality of the first signal does not meet a quality threshold.

17. The method according to any one of claims 1 to 16, wherein a waveform of the first signal is different from a waveform of the control channel, and/or a modulation scheme of the first signal is different from a modulation scheme of the control channel.

18. The method according to claim 17, wherein the first signal is obtained by modulation using a target modulation scheme, and the target modulation scheme comprises at least one of:
single-carrier amplitude modulation;
single-carrier frequency modulation; or
single-carrier phase modulation.

19. A method for detecting a control channel, performed by a network device, comprising:
transmitting a first signal, wherein the first signal is used to indicate a manner for a terminal device to control a second receiver to detect the control channel, the first signal is received by a first receiver of the terminal device, and power consumption of the first receiver is less than power consumption of the second receiver.

20. The method according to claim 19, wherein the first signal carries a detection parameter of the control channel.

21. The method according to claim 20, wherein the detection parameter of the control channel comprises at least one of:
a start detection indication;
a detection duration;
a detection period;
a detection count; or
a first search space set.

22. The method according to any one of claims 19 to 21, further comprising:
transmitting the control channel, wherein the control channel is used to indicate to the terminal device a manner for performing subsequent control channel detection.

23. The method according to claim 22, wherein the control channel comprises at least one of:
a skipping indication;
a sleep indication; or
a fourth search space set.

24. The method according to any one of claims 19 to 21, wherein a waveform of the first signal is different from a waveform of the control channel, and/or a modulation scheme of the first signal is different from a modulation scheme of the control channel.

25. The method according to claim 24, wherein the first signal is obtained by modulation using a target modulation scheme, and the target modulation scheme comprises at least one of:
amplitude modulation;
frequency modulation; or
phase modulation.

26. An apparatus for detecting a control channel, wherein the apparatus comprises a first receiver and a second receiver, power consumption of the first receiver being less than power consumption of the second receiver; and the apparatus further comprises:
a receiving module, configured to receive a first signal by the first receiver; and
a control module, configured to control the second receiver to detect the control channel based on an indication of the first signal.

27. An apparatus for detecting a control channel, comprising:
a transmitting module, configured to transmit a first signal, wherein the first signal is used to indicate a manner for a terminal device to control a second receiver to detect the control channel, the first signal is received by a first receiver of the terminal device, and power consumption of the first receiver is less than power consumption of the second receiver.

28. A terminal device, wherein the terminal device comprises a first receiver and a second receiver, power consumption of the first receiver being less than power consumption of the second receiver; and
the terminal device comprises a processor and a receiver connected to the processor; wherein
the receiver is configured to receive a first signal by the first receiver; and
the processor is configured to control the second receiver to detect a control channel based on an indication of the first signal.

29. A network device, wherein the network device comprises a processor and a transmitter connected to the processor; wherein
the transmitter is configured to transmit a first signal, the first signal is used to indicate a manner for a terminal device to control a second receiver to detect a control channel, the first signal is received by a first receiver of the terminal device, and power consumption of the first receiver is less than power consumption of the second receiver.

30. A computer-readable storage medium storing a computer program, wherein the computer program is configured to be executed by a processor, to implement the method for detecting a control channel according to any one of claims 1 to 18, and/or the method for detecting a control channel according to claims 19 to 25.

31. A chip, comprising: a programmable logic circuit and/or program instructions, wherein the chip, when operated on a terminal device or a network device, is configured to implement the method for detecting a control channel according to any one of claims 1 to 18, and/or the method for detecting a control channel according to claims 19 to 25.

32. A computer program product, comprising: computer instructions stored in a computer-readable storage medium; wherein a processor of a communication device reads the computer instructions from the computer-readable storage medium and executes the computer instructions, to enable the communication device to implement the method for detecting a control channel according to any one of claims 1 to 18, and/or the method for detecting a control channel according to claims 19 to 25.

33. A computer program, wherein the computer program is executed by a processor of a communication device, to implement the method for detecting a control channel according to any one of claims 1 to 18, and/or the method for detecting a control channel according to claims 19 to 25.
